# EUROPEAN PATENT APPLICATION

(11) **EP 4 510 748 A1**
(43) Date of publication of application: **19.02.2025**
(21) Application number: 23803717.0
(22) Date of filing: 18.04.2023
(51) Int. Cl.: H04W 72/27, H04W 76/15, H04W 76/22, H04W 28/086, H04W 92/20

(54) **DEVICE AND METHOD FOR CONTROLLING UPLINK PATH IN DUAL CONNECTIVITY**

(30) Priority: 13.05.2022 KR 20220059214; 02.06.2022 KR 20220067866
(71) Applicant: Samsung Electronics Co., Ltd., Suwon-si, Gyeonggi-do 16677 (KR)
(72) Inventor: OAK, Jeongyeob, Suwon-si, Gyeonggi-do 16677 (KR); MADE HARTA, Dwijaksara, Suwon-si, Gyeonggi-do 16677 (KR)
(74) Representative: HGF
(86) International application number: PCT/KR2023/005254
(87) International publication number: WO 2023/219294

(57) **Abstract**

A device comprising a first node operating in a master node (MN) in dual connectivity is provided. The device may comprise at least one transceiver and at least one processor coupled to the at least one transceiver. The at least one processor can receive, through an Xn interface, a secondary node (SN) modification required message from a second node operating in an SN. The SN modification required message can include indication information for an MN-terminated split bearer. The indication information can indicate the availability of UL usage at the SN. The at least one processor can identify an uplink (UL) primary path of the MN-terminated split bearer on the basis of the indication information for the MN-terminated split bearer, and can transmit, to a terminal, information for indicating the UL primary path.

## Description

### TECHNICAL FIELD

The present disclosure relates generally to dual connectivity, for example to an apparatus and/or a method for controlling an uplink path in dual connectivity.

### DESCRIPTION OF RELATED ART

Dual connectivity refers to a technology in which a user equipment (e.g., mobile handset) is simultaneously connected, directly or indirectly, with two or more independent heterogeneous and/or homogeneous wireless communication cell groups having a separate radio resource control entity. Efficiency in frequency usage can be increased by using frequency resources located in different frequency bands.

### SUMMARY

Certain example embodiments may provide an apparatus and/or a method for a master node (MN) of dual connectivity to provide a usage indication of an uplink (UL) path in the MN to a secondary (SN).

Certain example embodiments may provide an apparatus and/or a method for a secondary node (SN) of dual connectivity to provide a usage indication of an uplink (UL) path in the SN to a master node (MN).

According to certain example embodiments, a method performed by a first node operating as a master node (MN) in dual connectivity may include receiving, from a second node operating as a secondary node (SN) through an Xn interface, an SN modification required message. The SN modification required message may include indication information for an MN-terminated split bearer. The indication information may indicate an availability of an uplink (UL) usage at the SN. The method may include identifying an UL primary path of the MN-terminated split bearer, based on the indication information for the MN-terminated split bearer. The method may include transmitting, to a user equipment (UE), information for indicating the UL primary path. The UL primary path may be associated with one of a master cell group (MCG) of the MN and a secondary cell group (SCG) of the SN.

According to certain example embodiments, a method performed by a second node operating as a secondary node (SN) in dual connectivity may include obtaining uplink status information through a measurement report or medium access control (MAC) indication from a user equipment (UE). The method may include generating indication information for an MN-terminated split bearer based on the uplink status information. The indication information may indicate an availability of an uplink (UL) usage at the SN. The method may include transmitting, to a first node operating as a master node (MN) through an Xn interface, an SN modification required message. The indication information for the MN-terminated split bearer may be used for identifying an UL primary path of the MN-terminated split bearer. The UL primary path may be associated with one of a master cell group (MCG) of the MN and a secondary cell group (SCG) of the SN.

According to certain example embodiments, an apparatus of a first node operating as a master node (MN) in dual connectivity may include at least one transceiver, and at least one processor coupled, directly or indirectly, to the at least one transceiver. The at least one processor may be configured to receive, from a second node operating as a secondary node (SN) through an Xn interface, an SN modification required message. The SN modification required message may include indication information for an MN-terminated split bearer. The indication information may indicate an availability of an uplink (UL) usage at the SN. The at least one processor may be configured to identify an UL primary path of the MN-terminated split bearer, based on the indication information for the MN-terminated split bearer. The at least one processor may be configured to transmit, to a user equipment (UE), information for indicating the UL primary path. The UL primary path may be associated with one of a master cell group (MCG) of the MN and a secondary cell group (SCG) of the SN.

According to certain example embodiments, an apparatus of a second node operating as a secondary node (SN) in dual connectivity may include least one transceiver and at least one processor coupled, directly or indirectly, to the at least one transceiver. The at least one processor may be configured to obtain uplink status information through a measurement report or medium access control (MAC) indication from a user equipment (UE). The at least one processor may be configured to generate indication information for an MN-terminated split bearer, based on the uplink status information. The indication information may indicate an availability of an uplink (UL) usage at the SN. The at least one processor may be configured to transmit, to a first node operating as a master node (MN) through an Xn interface, an SN modification required message. The indication information for the MN-terminated split bearer may be used for identifying an UL primary path of the MN-terminated split bearer. The UL primary path may be associated with one of a master cell group (MCG) of the MN and a secondary cell group (SCG) of the SN.

An apparatus and/or a method according to example embodiments may make it possible to increase performance of uplink transmission by enabling measurement of uplink quality out of a range managed by each node.

The effects that can be obtained are not limited to those described above, and any other effects not mentioned herein will be clearly understood by those having ordinary knowledge in the art to which the disclosure belongs, from the following description.

### DESCRIPTION OF THE DRAWINGS

FIGS. 1A and 1B each illustrate examples of wireless communication environment according to example embodiments;
FIG. 2 illustrates an example of a downlink path and an uplink path in dual connectivity (DC) according to example embodiments;
FIG. 3A illustrates interfaces of base stations with a distributed deployment according to example embodiments;
FIG. 3B illustrates an example of signaling of a base station with a distributed deployment according to example embodiments;
FIG. 4A illustrates interfaces in dual connectivity according to example embodiments;
FIG. 4B illustrates layers of a control plane in dual connectivity according to example embodiments;
FIG. 4C illustrates layers of a user plane in dual connectivity according to example embodiments;
FIG. 5 shows an example of a radio bearer according to example embodiments;
FIG. 6A illustrates an example of signaling for uplink (UL) path control of a secondary node (SN)-terminated split bearer according to example embodiments;
FIG. 6B illustrates another example of signaling for UL path control of an SN-terminated split bearer according to example embodiments;
FIG. 7A illustrates an example of signaling for UL path control of a master node (MN)-terminated split bearer according to example embodiments;
FIG. 7B illustrates another example of signaling for UL path control of an MN-terminated split bearer according to example embodiments;
FIG. 8A illustrates an example of signaling between CU-DUs for controlling a UL path of an SN-terminated split bearer according to example embodiments;
FIG. 8B illustrates an example of signaling between CU-DUs for controlling a UL path of an MN-terminated split bearer according to example embodiments;
FIG. 9 illustrates an example of a message for UL path control of an SN termination split bearer according to example embodiments;
FIG. 10 illustrates an example of a message for UL path control of an MN termination split bearer according to example embodiments; and
FIG. 11 illustrates a functional configuration of a device acting as an MN or an SN according to example embodiments.

### DETAILED DESCRIPTION

The terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same as or similar meaning as those in the context of the related art, and they are not to be construed in an ideal or overly formal sense, unless explicitly defined in the disclosure. In some cases, even the terms defined in the disclosure may not be interpreted to exclude example embodiments.

In various examples of the disclosure described below, a hardware approach will be described as an example. However, since various example embodiments include a technology that utilizes both the hardware-based and the software-based approaches, they are not intended to exclude the software-based approach.

As used in the following description, the terms referring to signals (e.g., signal, information, message, signaling), the terms referring to resources (e.g., symbol, slot, subframe, radio frame, subcarrier, resource element (RE), resource block (RB), bandwidth part (BWP), occasion), the terms referring to the state for resources (enable, disable, activation, deactivation, available, unavailable, facilitate, applicable, accessible), the terms for indicating operating states (e.g., step, operation, procedure), the terms referring to data (e.g., packet, user stream, information, bit, symbol, codeword), the terms referring to channels, the terms referring to network entities, the terms referring to components of an apparatus, and so on are illustrated for convenience of description. Therefore, the disclosure is not limited to those terms described below, and other terms having equivalent technical meanings may be used therefor.

Further, throughout the disclosure, an expression such as e.g., 'above' or 'below' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'above', a condition described as 'less than or equal to' may be replaced with 'below', and a condition described as 'more than or equal to' and 'below' may be replaced with 'above' and 'less than or equal to', respectively. In addition, unless explicitly dictated otherwise, 'A' to 'B' is intended to mean at least one of the elements from A to (inclusive of A) and B (inclusive of B).

Further, the disclosure describes various embodiments using terms used in some communication specifications (e.g., 3GPP (3rd Generation Partnership Project), xRAN (extensible radio access network), and O-RAN (open-radio access network), but it is merely an example for description. Various embodiments of the disclosure may be easily modified and applied even in other communication systems.

Throughout the disclosure, the measurement signal may refer to a signal measured by a terminal in order to obtain the signal quality for use in mobility, admission control, or radio resource management (RRM). For example, the measurement signal may at least one of synchronization signal (e.g., SS block), beam reference signal (BRS), beam refinement reference signal (BRRS), cell-specific reference signal (CRS), channel status information-reference signal (CSI-RS), or demodulation-reference signal (DM-RS). According to embodiments, the base station may not only transmit one type of measurement signal, but also transmit a measurement signal of each of two or more types.

The signal quality may refer to at least one of, for example, reference signal received power (RSRP), beam reference signal received power (BRSRP), reference signal received quality (RSRQ), received signal strength indicator (RSSI), signal to interference and noise ratio (SINR), carrier to interference and noise ratio (CINR), signal to noise ratio (SNR), error vector magnitude (EVM), bit error rate (BER), or block error rate (BLER). In addition to the above-described examples, it will be apparently understood that other terms having equivalent technical meanings or other metrics indicating channel quality may be used. Hereinafter, the term 'high signal quality' used in the disclosure may refer to an occasion that a signal quality value related to a signal size is relatively larger or a signal quality value related to an error rate is relatively smaller. The higher signal quality value may imply that the smoother wireless communication environment is guaranteed. Further, an optimal beam may refer to a beam having the highest signal quality amongst multiple beams.

Certain example embodiments relate to a procedure for determining an uplink primary path in a dual connectivity of a wireless communication system. More specifically, the disclosure provides a solution for providing information on use of an uplink (UL) path to a secondary node (SN) by a master node (MN) or to an MN by an SN, in order to determine an UL primary path, in a split bearer. Furthermore, the disclosure makes it possible to significantly improve the performance of data transmission via the optimal uplink primary path, by sharing information on the usage of the UL path between the MN and the SN.

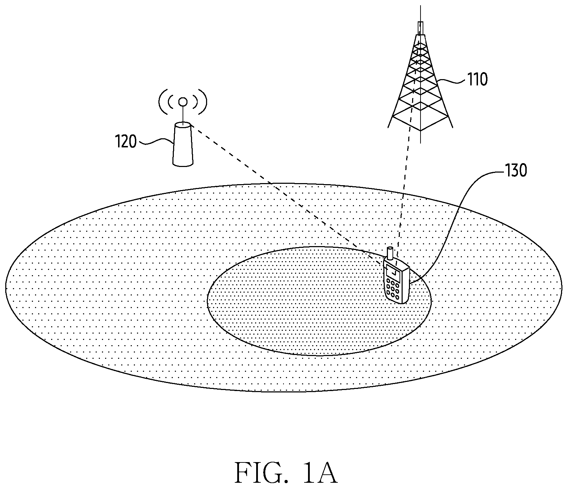

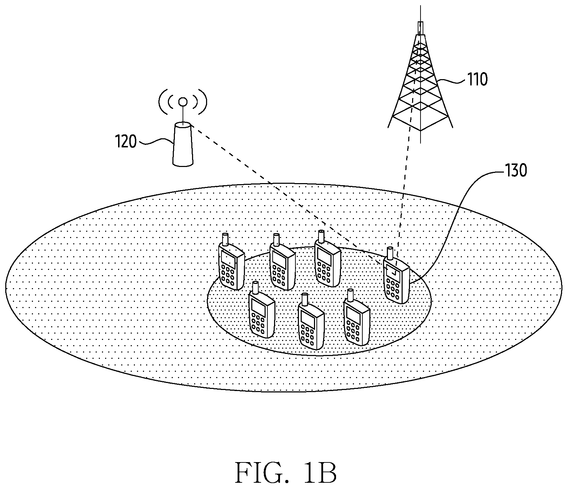

FIGS. 1A and 1B illustrate examples of a wireless communication environment according to embodiments. FIGS. 1A and 1B each illustrate a terminal (or user equipment) and a base station as nodes using a radio channel in a wireless communication system.

Referring to FIGS. 1A and 1B, the wireless total system may include a first base station 110, a second base station 120, and a terminal 130.

A first base station 110 or a second base station 120 is a network infrastructure that provides wireless access. In addition to the term 'base station', the first base station 110 or the second base station 120 may be referred to as 'access point (AP)', 'eNodeB (or eNB)', '5th generation node (5G node)', '5G nodeB (NB)', 'next generation node B (gNB)', 'radio access network (RAN) node, transmission/reception point (TRP), distributed unit (DU), radio unit (RU), remote radio head (RRH), or other terms with equivalent technical meanings thereto. According to an embodiment, the first base station 110 or the second base station 120 may be connected, directly or indirectly, to one or more transmission/reception points (TRPs). The first base station 110 or the second base station 120 may transmit a downlink signal or receive an uplink signal to/from the terminal 130 through one or more TRPs.

The terminal 130, which is a device used by a user, may communicate with the first base station 110 or the second base station 120 over a wireless channel. In some cases, the terminal 130 may operate without any user's intervention. That is, at least one of the terminals 130 may be of a device that performs machine type communication (MTC), which may not be carried by a user. In addition to the terminal, the terminal 130 may be referred to as 'user equipment (UE)', 'mobile station', 'subscriber station', 'customer premises equipment (CPE)', 'remote terminal', 'wireless terminal', 'electronic device', or 'vehicle terminal', 'user device', or any other terms having equivalent technical meaning thereto.

The terminal 130 according to embodiments may be configured in a dual connectivity (DC) using both the first base station 110 and the second base station 120. The dual connectivity refers to a technology in which a terminal may be connected, directly or indirectly, to two different radio resource entities to use radio resources allocated by each of the radio resource entities. In MR-DC, a UE (e.g., the UE 130, which may be a mobile handset for example) in an RRC connected state (e.g., RRC_CONNCETED) may be configured to use radio resources provided by two independent schedulers, wherein each scheduler may be located at an NG-RAN node (e.g., the first base station 110 and the second base station 120). Here, one node is a master node (MN) and the other node is a secondary node (SN). The MN and the SN may be connected through a network interface, and the MN may be connected to a core network. SN may or may not be connected, directly or indirectly, to the core network.

The MN may provide a master cell group (MCG). The MN may be referred to as an M-NODE or an M-NG-RAN node in addition to the MN. The MCG may include one or more cells. The MCG may include a primary cell (PCell). The MCG may include a plurality of aggregated cells. The MCG may include a PCell and one or more secondary cells (SCell). The SN may provide a secondary cell group (SCG). SN may be referred to as an S-NODE or an S-NG-RAN node in addition to SN. The SCG may include one or more cells. The SCG may include a plurality of aggregated. Like the MCG, the SCG may include a PCell and/or an SCell. A cell acting as a PCell in the SCG may be referred to as a primary secondary cell (PSCell). A sub-cell group may include a PSCell and one or more SCells. Hereinafter, a special cell (SpCell) may be used as a term including PCell and PSCell. The Spcell refers to a primary cell of an MCG or and SCG. In other words, the SpCell of the MCG may indicate the PCell, and the SpCell of the SCG may indicate the SCell.

Definition of possible types of DCs may be provided as follows.

**EN-DC:** A dual connection in which an eNB is connected, directly or indirectly, to an evolved packet core (EPC) and a terminal is connected, directly or indirectly, to an eNB acting as an MN and a gNB acting as an SN. Here, the gNB may be referred to as an en-gNB, and the en-gNB may or may not be connected to the EPC.

**NGEN-DC:** A dual connection in which an eNB is connected, directly or indirectly, to a 5G core (5GC) and a terminal is connected, directly or indirectly, to an eNB acting as an MN and a gNB acting as an SN. Here, the eNB may be referred to as an ng-eNB.

**NE-DC:** A dual connection in which a gNB is connected, directly or indirectly, to 5GC and a terminal is connected, directly or indirectly, to a gNB operating as an MN and an eNB operating as an SN. Here, the eNB may be referred to as an ng-eNB.

**NR-DC:** A dual connectivity in which gNBs are connected, directly or indirectly, to 5GC and a terminal is connected to a gNB acting as an MN and a gNB acting as an SN. NR-DC may also be used when the UE is connected, directly or indirectly, to a (e.g., single) gNB to perform the role of both the MN and the SN and configure both the MCG and the SCG.

The terminal 130 may support multi-radio (MR)-DC. The terminal 130 may be connected, directly or indirectly, to the first base station 110 and the second base station 120. The first base station 110 may be an MN, and the second base station 120 may be an SN, so that they may be connected to the terminal. Along with carrier aggregation (CA) provided by each base station, the dual connection may provide a higher data rate. The first base station 110 and the second base station 120 may transmit downlink traffic to the terminal 130 or receive uplink traffic from the terminal 130, as an MN and an SN, respectively.

The terminal 130 may be located within a cell coverage of the first base station 110. The terminal 130 may be located within a cell coverage of the second base station 120. In a split bearer, downlink transmission may be performed through a PCell and a PSCell. The split bearer may refer to a radio bearer with an RLC bearer in both an MCG and an SCG in MR-DC. The terminal 130 may use the wireless network resources of the first base station 110 and the second base station 120 together, through the split bearer. According to an embodiment, the split bearer may be of an MN-terminated bearer. The MN-terminated bearer may refer to a bearer in which a packet data convergence protocol (PDCP) is in the MN. The split bearer may be of an SN-terminated bearer. The SN-terminated bearer refers to a bearer in which PDCP is in SN.

The uplink transmission of the terminal 130 may be performed through at least one of the PCell or the PSCell. The terminal 130 may determine whether to transmit uplink data to one of the first base station 110 and the second base station 120 or whether to transmit uplink data to the first base station 110 and the second base station 120 through splitting, based on a size of the uplink data. In this case, it is required to set an uplink primary path used in both the situations. For example, a channel status for uplink transmission at a cell edge may not be good. For example, the terminal 130 may be located at a cell edge of the PSCell. Unlike FIG. 1A, a plurality of terminals may be connected to the PScell of the terminal 130 as seen in FIG. 1B. That is, a plurality of terminals may make access to the second base station 120. In such an occasion, it is required to find a UL primary path of the terminal 130.

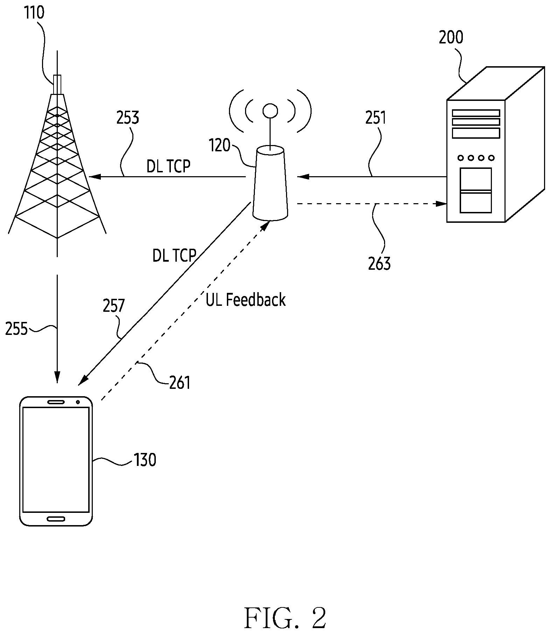

FIG. 2 illustrates an example of a downlink path and an uplink path in dual connectivity (DC) according to embodiments. The first base station 110 may act as the MN of the dual connectivity, and the second base station 120 may act as the SN of the dual connectivity.

Referring to FIG. 2, the server 200 may transmit downlink traffic to the terminal 130. In the split bearer, the path of the downlink traffic may include at least two paths. For example, the split bearer may be of an SN-terminated split bearer. The server 200 may provide downlink traffic to the second base station 120 through a path 251. Then, the path 251 may be branched into two paths from the second base station 120. The first path may include a backhaul 253 and a first wireless network 255. The terminal 130 may receive downlink traffic from the second base station 120 via the first base station 110. The second path may include a second wireless network 257 (e.g., see DL TCP). The terminal 130 may receive the downlink traffic directly from the second base station 120.

The transmission control protocol (TCP) type of traffic may be the main traffic of the network. TCP traffic transmission is dependent on feedback transmitted by a receiving end for the purpose of end-to-end flow control. The terminal 130 may transmit uplink feedback (e.g., acknowledge (ACK) or negative acknowledge (NACK)) to the server 200. The current main UL path of the terminal 130 may include an uplink radio network 261 with the second base station 120. The terminal 130 may transmit uplink feedback to the second base station 120. The second base station 120 may transmit uplink feedback to a server 200 through a path 263. In this occasion, as shown in FIG. 1B, the uplink channel status of the terminal 130 may be poor due to the terminals connected to the PScell. Such a bad-conditioned channel status may delay the feedback. When the traffic is congested in a specific path, the server 200 may reduce a data transmission rate according to a certain TCP flow control algorithm. However, the reduced transmission rate may reduce its throughput. Meanwhile, when the uplink traffic can be transmitted to the server 200 without delay through the first base station 110, the terminal 130 may transmit the uplink feedback without reduced throughput. The terminal 130 is required to change the main UL path to a wireless network with the first base station 110 for achieving higher throughput. However, as shown in FIG. 2, in the SN-terminated split bearer, the second base station 120 acting as the SN does not know the uplink channel status of the first base station 110 acting as the MN. That is to say, the second base station 120 may not guarantee that the status of the uplink channel between the terminal 130 and the first base station 110 is higher than that of the uplink channel between the terminal 130 and the second base station 120.

In order to address the above-described problem, example embodiments propose a solution for an MN to inform an SN of an uplink channel status of the MN or for an SN to inform an MN of an uplink channel status of the SN, in order to accurately set an uplink primary path in a split bearer. According to an embodiment, in the SN-terminated split bearer, the MN may transmit information about uplink usage of the MN to the SN. According to an embodiment, in the MN-terminated split bearer, the SN may transmit information about uplink usage of the SN to the MN.

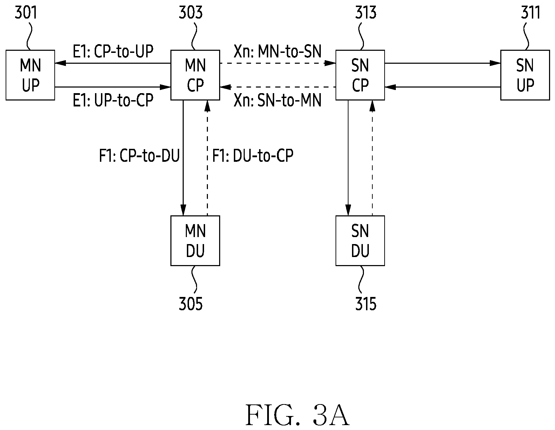

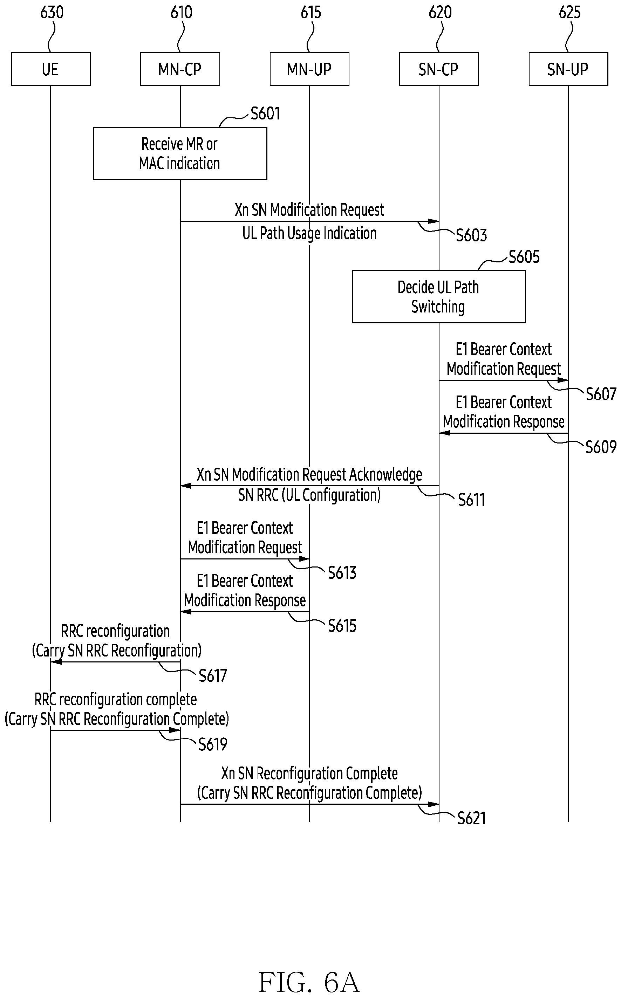

Hereinafter, description will be made of nodes, interfaces, and hierarchical structures according to distributed deployment of a base station acting as an MN or an SN with reference to FIGS. 3A to 5. Then, the operation of the MN and the SN will be described with reference to FIGS. 6A to 10.

FIG. 3A illustrates interfaces of base stations having a distributed deployment according to embodiments.

Referring to FIG. 3A, the MN may refer to an NG-RAN node providing an MCG in DC. The MN may include a central unit (CU). The CU may include a user plane (CU-UP) 301 and a control plane (CU-CP) 303. Hereinafter, the CU-UP 301 of the MN may be referred to as an MN-UP. The CU-CP 303 of the MN may be referred to as an MN-CP. The MN-UP 301 and the MN-CP 303 may perform communication via an E1 interface. The MN may include a distributed unit (DU) 305. Hereinafter, the DU 305 of the MN may be referred to as an MN-DU. The MN-DU 305 and the MN-CP 303 may perform communication via an F1 interface.

The SN may refer to an NG-RAN node providing SCG in DC. The SN may include CU. The CU may include a CU-UP 311 and a CU-CP 313. Hereinafter, the CU-UP 311 of the SN may be referred to as an SN-UP. The CU-CP 313 of the SN may be referred to as an SN-CP. The SN-UP 311 and the SN-CP 313 may perform communication through the E1 interface. The SN may include a distributed unit (DU) 315. Hereinafter, the DU 315 of the SN may be referred to as an SN-DU. The SN-DU 315 and the SN-CP 313 may perform communication through the F1 interface.

The MN and the SN may communicate through a backhaul interface (e.g., an Xn interface). The MN-CP 303 may transmit information to the SN-CP 313 through the Xn interface. The SN-CP 313 may transmit information to the MN-CP 303 through the Xn interface.

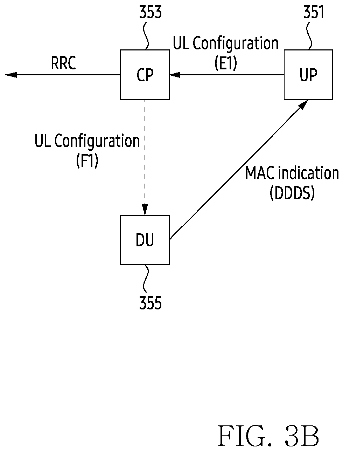

FIG. 3B illustrates an example of signaling of a base station having a distributed deployment according to embodiments.

Referring to FIG. 3B, the base station may include an UP 351 of the CU, a CP 353 of the CU, and a DU 355. First, the DU 355 may transmit a medium access control (MAC) indication to the UP 351. The MAC indication may include a downlink data delivery status (DDDS). The DU 355 may notify the UP 351 of a UL radio link outage/Resume cause. The UP 351 may transmit a UL configuration to the CP 353 through the E1 interface. Here, the UL configuration may include information on uplink usage. Then, the CP 353 may provide RRC signaling. The CP 353 may transmit the UL configuration to the DU 355 through the F1 interface. However, this scheme requires participation of the UP 351. Since more nodes are required to process the information, the probability of failure may increase. Further, even if the MAC indication fails to be transmitted to the UP 351, a mechanism for retransmitting the MAC indication is not defined, and thus the above scheme is not suitable for determining a stable UL configuration. Accordingly, instead of F1-U signaling from the DU 355 to the UP 351, example embodiments propose signaling (e.g., signaling using the Xn interface) between the CP 353 and another CP 353 or signaling (e.g., an F1 interface) between the DU 355 and the CP 353.

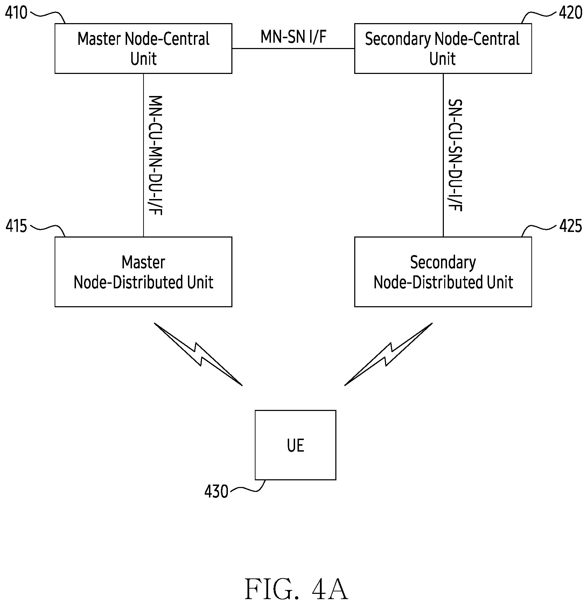

FIG. 4A illustrates interfaces in dual connectivity according to embodiments.

Referring to FIG. 4A, network entities for dual connectivity may include a UE 430, an MN-CU 410, an MN-DU 415, an SN-CU 420, and an SN-DU 425. The UE 430 may support MR-DC.

The UE 430 may be connected to a first NG-RAN node. The first NG-RAN node may include an MN-CU 410 and an MN-DU 415. The UE 430 may communicate with the MN-DU 415 through a Uu interface. The MN-DU 415 may communicate with the MN-CU 410 through the F1 interface. The MN-CU 410 and the MN-DU 415 may provide an MCG. The UE 430 may be connected to a second NG-RAN node. The second NG-RAN node may include an SN-CU 420 and an SN-DU 425. The UE 430 may communicate with the SN-DU 425 through a Uu interface. The SN-DU 425 may communicate with the SN-CU 420 through the F1 interface. The SN-CU 420 and the SN-DU 425 may provide an SCG.

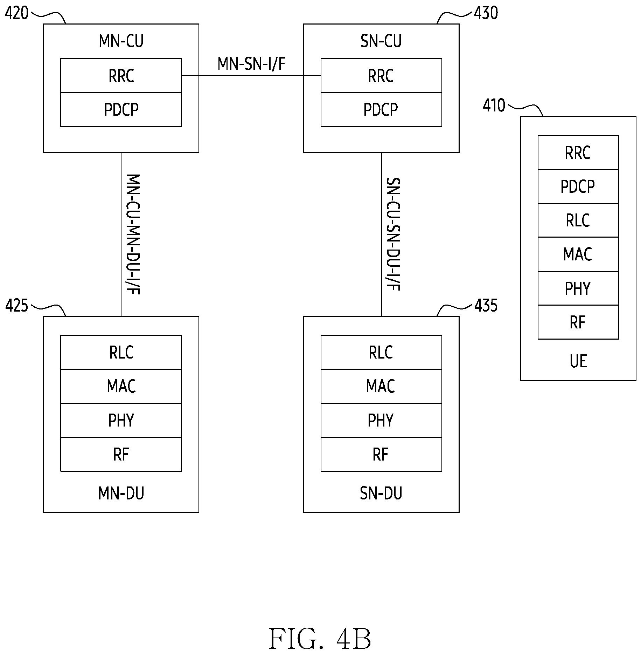

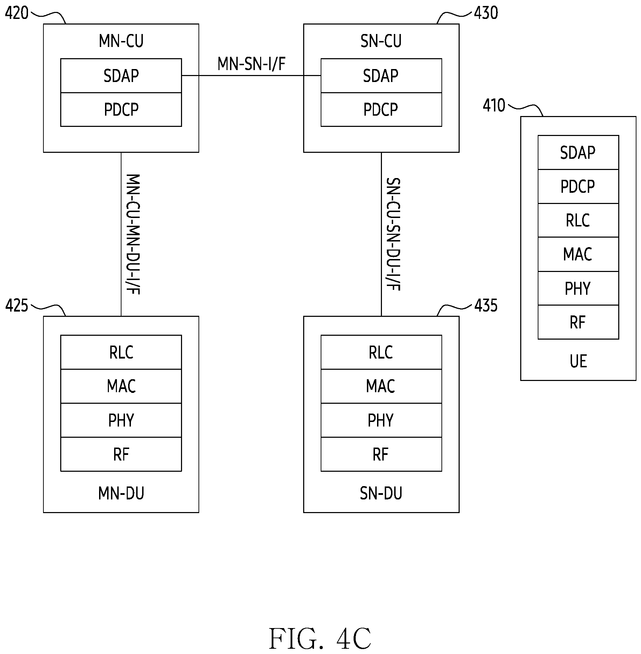

FIG. 4B illustrates layers of a control plane in a dual connectivity according to embodiments. FIG. 4C illustrates layers of a user plane in a dual connectivity according to embodiments. As described in FIG. 4A, network entities for dual connectivity may include a UE 430, an MN-CU 410, an MN-DU 415, an SN-CU 420, and an SN-DU 425.

Referring to FIG. 4B, in the control plane, the CU may host a radio resource control (RRC) protocol and a packet data convergence protocol (PDCP) protocol, and the DU may host a radio link control (RLC) layer, a medium access control (MAC) layer, and a physical (PHY) layer. The F1 interface between the CU and the DU may be referred to as F1-C (control).

Referring to FIG. 4C, in the control plane, the CU may host an SDAP protocol and the PDCP protocol, and the DU may host the RLC layer, the MAC layer, and the PHY layer. The F1 interface between the CU and the DU may be referred to as an F1-U (user).

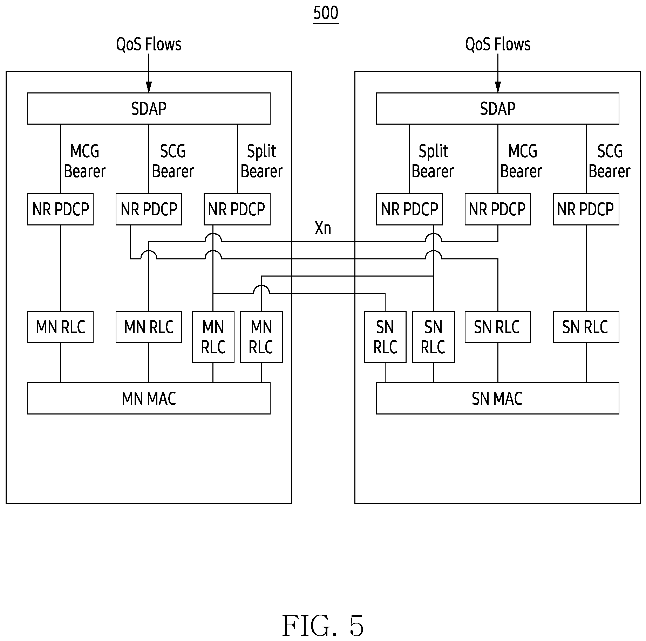

FIG. 5 shows an example 500 of a radio bearer according to embodiments. The radio bearer may include a signaling radio bearer (SRB) and a data radio bearer (DRB). The SRB may be used as a path for transmitting an RRC message in the control plane. The DRB may be used as a path for transmitting user data in the user plane. In FIG. 5, bearers making up a user plane of NR-NR DC are described as an example, but example embodiments may also be applied to various types of DCs such as e.g., EN-DC, NE-DC, and NGEN-DC.

Referring to FIG. 5, the MN may be a gNB. The MN may provide MCG. The SN may be gNB. The SN may provide SCG. The MN and the SN may communicate via the Xn interface. In the user plane, the MN may receive one or more quality of service (QoS) flows through the SDAP protocol. The MN may perform QoS flow mapping with a data radio bearer (DRB). The MN may map at least one QoS flow to the DRB. In the user plane, the SN may receive one or more QoS flows through the SDAP protocol. The SN may perform QoS flow mapping with DRB. The SN may map at least one QoS flow to the DRB.

From a UE perspective, the DRB may have three types. These three types may include an MCG bearer, an SCG bearer, and a split bearer. The MCG bearer may refer to a radio bearer in which an RLC bearer exists only in an MN (or MCG). The SCG bearer may refer to a radio bearer in which the RLC bearer exists only in the SN (or SCG). The split bearer may refer to a radio bearer in which RLC bearers are present in both the MN (or MCG) and the SN (or SCG).

From a network perspective, the DRB may have two types. These two types may include an MN-terminated bearer and an SN-terminated bearer. The MN-terminated bearer may refer to a bearer in which the PDCP is in the MN. The SN-terminated bearer may refer to a bearer in which the PDCP is in SN.

The procedures according to example embodiments are for controlling a UL path of a terminal of DC. In the MCG bearer or the SCG bearer, the UL path of the terminal is not required for selection. This is because the terminal of the MCG bearer may transmit UL traffic to the MN. Likewise, the terminal of the SCG bearer may transmit the UL traffic to the SN. The procedures according to certain example embodiments are to select whether a target of the UL path for delivery of the UL traffic is for either an MN or an SN. Accordingly, a radio bearer that is a target of a UL path according to embodiments may be a split bearer.

The split bearer may provide a high degree of freedom for downlink transmission and uplink transmission. For the split bearer, the gNB may independently configure downlink transmission and uplink transmission. For example, in the split bearer, the terminal may receive DL traffic through both the MN radio spectrum and the SN radio spectrum and may transmit the UL traffic only in either one of the MN and the SN. As another example, in the split bearer, the terminal may receive DL traffic through both the MN radio spectrum and the SN radio spectrum, transmit the split UL traffic to either one of the MN and the SN, and transmit another split UL traffic to the other one of the MN and the SN. A threshold value (e.g., ul-DataSplitThreshold of 3GPP TS 38.331) set for the terminal may be used to determine whether to split. The uplink path used in all the above-described examples may be referred to as an uplink primary path. As described with reference to FIG. 2, as the uplink feedback affects the throughput of flow control, it is required to identify an optimal uplink primary path.

According to embodiments, the base station may configure an uplink primary path for the terminal. According to an embodiment, the base station may transmit an RRC reconfiguration message (e.g., RRCReconfiguration of 3GPP TS 38.331) to the terminal. The RRC reconfiguration message may include a radio bearer configuration (e.g., RadioBearerConfig IE (information element) of 3GPP TS 38.331). The radio bearer configuration may be used for addition, modification, or releasing of an SRB, an MRB (MBS (multicast/broadcast service (MBS) radio bearer) and/or a DRB. In particular, the radio bearer configuration may include parameters related to PDCP. The radio bearer configuration may or may not include parameters related to SDAP.

The parameters related to PDCP may be included in a PDCP configuration (e.g., PDCP-Config of 3GPP TS 38.331). When the currently configured radio bearer is a split bearer, two or more RLC entities in the terminal may be associated with one PDCP entity. The two or more RLC entities may include a main RLC entity and one or more sub-RLC entities. For UL data transmission, the PDCP configuration may include information indicating that two or more RLC entities are related to one PDCP entity (e.g., 'moreThanOneRLC'IE of 3GPP TS 38.331). According to an embodiment, the PDCP configuration may include information on a primary path (e.g., 'primarypath' IE of 3GPP TS 38.331). The information on the primary path may indicate a cell group ID and a logical channel identifier (LCID) of a main RLC entity.

According to an embodiment, the PDCP configuration may include information about a split threshold value (e.g., ul-DataSplitThreshold of TS 38.331 of 3GPP). The terminal may identify the split threshold value from the PDCP configuration. The split threshold value may indicate a data size. For example, the split threshold value may indicate 100 bytes. As another example, the split threshold value may indicate 200 bytes. When the terminal transmits uplink data having a size greater than the split threshold value, the terminal may divide the uplink data. According to another embodiment of the disclosure, when the split bearer is configured, the PDCP configuration may not include information on the split threshold. The default value of the threshold value may be infinity. That is, the terminal may not perform division of the uplink data.

In general, the UL path requires that a cell group of relatively good channel quality (e.g., RSRP, RSRQ, SINR) be selected to avoid failure of delivery of the UL packet. The base station acting as the MN or the base station acting as the SN may identify the UL primary path, based on various parameters such as e.g., the number of terminals using the cell group, available resources of the cell group, and the congestion status of the cell group, in addition to the channel quality.

In the MN-terminated split bearer, the PDCP is positioned in a base station acting as the MN. As illustrated in FIG. 5, the split bearer includes paths branching from a PDCP to two RLC entities. Accordingly, such a change in the UL primary path may be performed by the MN. This is because the UL primary path is related to the PDCP configuration. Meanwhile, the base station acting as the MN may obtain an uplink measurement result for cells (e.g., at least one serving cell or at least one neighboring cell) related to the base station, from the terminal. However, the base station acting as the MN may be unable to obtain an uplink measurement result for cells related to the base station acting as the SN. The base station acting as the MN may have difficulty in identifying the optimal UL primary path of the MN-terminated split bearer, without usage information on the uplink of the base station acting as the SN.

Similar to the MN-terminated split bearer, in the SN-terminated split bearer, the PDCP is positioned in the base station acting as the SN. Such a change in the UL primary path may be performed by the SN. Meanwhile, the base station acting as the SN may obtain an uplink measurement result for the cells (e.g., at least one serving cell or at least one neighboring cell) related to the base station, from the terminal. However, the base station acting as the SN cannot obtain the uplink measurement result for the cells related to the base station acting as the MN. Thus, it may be difficult for the base station acting as the SN to identify the optimal UL primary path of the SN-terminated split bearer, without usage information on the uplink of the base station acting as the MN.

As a solution to the above, a scheme of configuring the configuration information for cells related to the SN for the terminal may be considered when the MN configures the measurement cell. However, there may be a limitation that values of the parameters configured by the MN for the terminal should be the same as values of the parameters configured by the SN for the terminal, and thus, the determination of the MN and the determination of the SN are most likely to be different from each other. In addition, since setting of some measurement gap is required, it may lead to reduced throughput. Alternatively, another scheme of performing periodic measurements in MN and SN, respectively, and sharing these measurement results may also be considered. However, such a periodic measurement may cause some burden onto electric power of the terminal.

Certain example embodiments may solve the above-described problems via signaling of MN and SN. The interfaces of FIG. 3A may be used to set an optimal UL path for the split bearer.

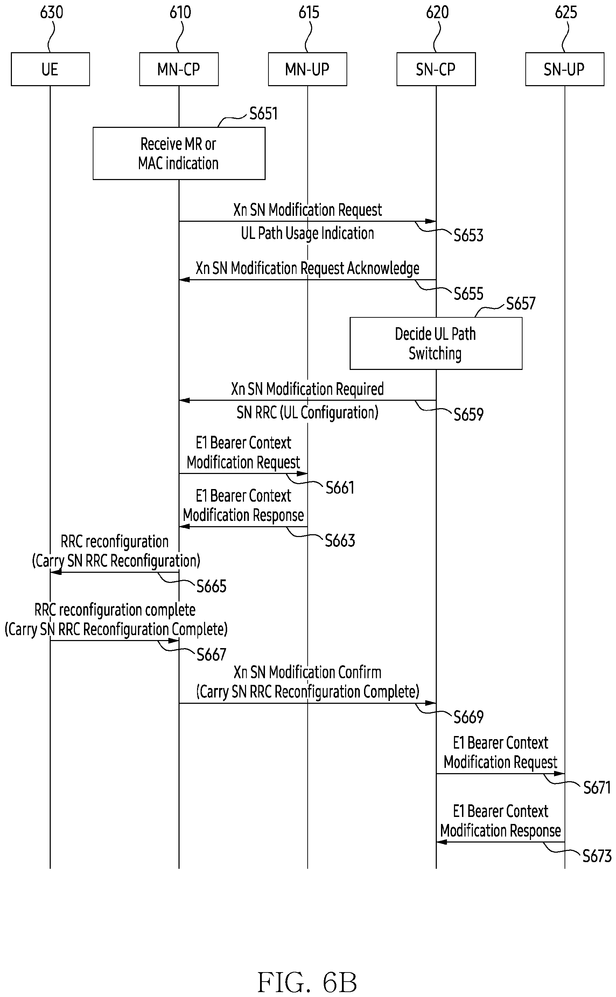

According to an embodiment, the base station acting as the MN may transmit information about uplink usage of the MN to the base station acting as the SN, by using the Xn interface message of the current standard specification. The base station acting as the SN may identify a primary path for the SN-terminated split bearer, based on the information about the uplink usage of the MN. Hereinafter, with reference to FIGS. 6A and 6B, description will be made to an embodiment that the information about uplink usage of the MN is transmitted to the base station acting as the SN, for the SN-terminated split bearer.

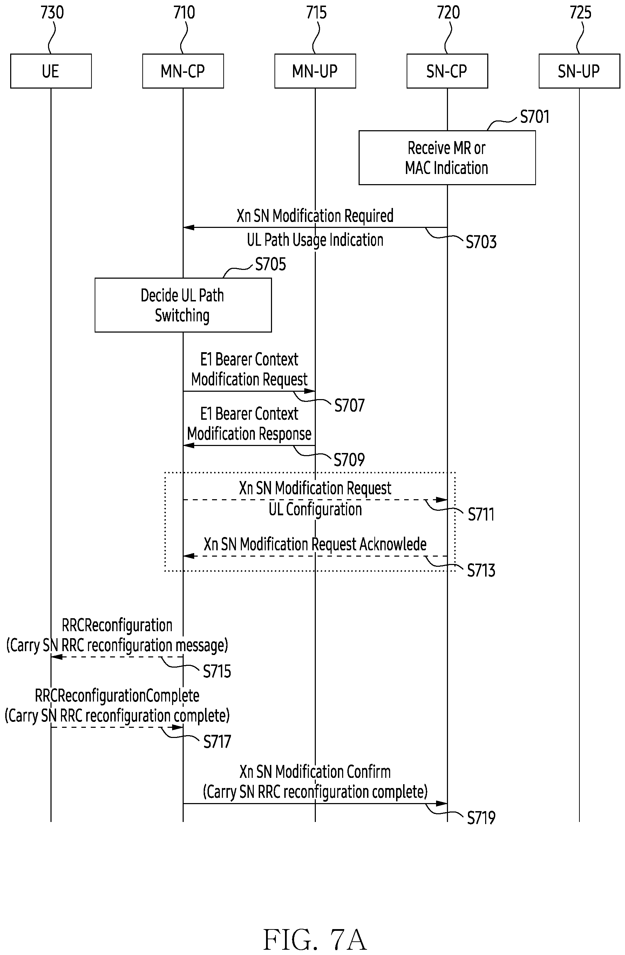

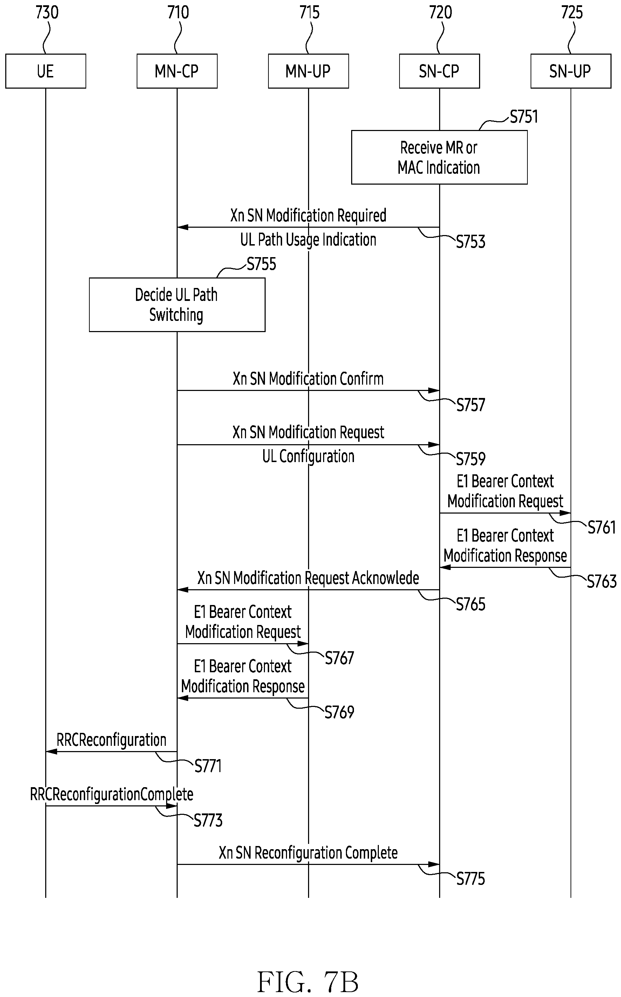

According to an embodiment, the base station acting as the SN may transmit information about uplink usage of the SN to the base station acting as the MN, by using the Xn interface message of the current standard specification. The base station acting as the MN may identify the primary path for the MN-terminated split bearer, based on the information on the usage of the uplink of the SN. Hereinafter, with reference to FIGS. 7A and 7B, description will be made to an embodiment that the information on the uplink use of the MN is transmitted to the base station acting as the SN, for the SN-terminated split bearer.

FIG. 6A illustrates an example of signaling for controlling an uplink (UL) path of a secondary node (SN)-terminated split bearer according to embodiments. An MN-CP 610, an MN-UP 615, an SN-CP 620, an SN-UP 625, or a UE 630 are illustrated as nodes for the UL path control. The description of the interface between each node and nodes described above with reference to FIGS. 2 to 5 may be also applied to the MN-CP 610, the MN-UP 615, the SN-CP 620, the SN-UP 625, and/or the UE 630.

Referring to FIG. 6A, in operation S601, the MN-CP 610 may receive a measurement report or a medium access control (MAC) instruction. The measurement report may include at least one of a measurement result for a serving cell of the MN or a measurement result for a neighboring cell. The measurement result may indicate the radio status of the uplink channel of the MN. The MAC indication may include a downlink data delivery status (DDDS). The purpose of delivering the DDDS is to provide feedback to a node hosting an NR PDCP entity from a corresponding node, so that the node hosting the NR PDCP entity can control the downlink user data flow through the corresponding node for each data radio bearer. According to an embodiment, the MN-CP 610 may determine whether the UL path using the MCG is available, based on at least one of the measurement report or the MAC indication.

In operation S603, the MN-CP 610 may transmit an SN Modification Request message to the SN-CP 620 through the Xn interface. According to embodiments, the SN modification request message may include indication information. The indication information may include information on usage of the UL path. Throughout the disclosure, the indication information may indicate whether the MCG resource or the SCG resource may be used for the UL path in the split bearer, that is, its availability. The PDCP of the SN-terminated split bearer is positioned in the SN, and the RLC and MAC of the SN-terminated split bearer are positioned in both the MN and the SN. In order to determine the optimal UL primary path, the SN-CP 620 may require information on the uplink radio channel in the MN in addition to the SN. The MN-CP 610 may determine whether the UL path using the MCG is available. As the determination of the MN-CP 610 is provided to the SN, the SN can identify the optimal UL primary path more accurately.

According to an embodiment, the SN modification request message may include PDU session resource modification information. The PDU session resource information may be configured for the SN-terminated split bearer. For example, the PDU session resource modification information may be 'PDU Session Resource Modification Info - SN terminated' IE of 3GPP TS 38.423. The IE may include information related to a PDU session resource, for a request for modifying a DRB configured with an option corresponding to the SN-terminated bearer. The request may be initiated by an M-NG-RAN node.

According to an embodiment, the PDU session resource information may include the DRB and indication information corresponding to the DRB. The indication information may indicate whether the MCG resource may be used as an UL path in the DRB. For example, the PDU session resource information may include parameters as shown in the following table.

**[Table 1]**

| **IE Name** | **Semantics description** |
|---|---|
| DRBs To Be Modified List | |
| >DRBs to Be Modified Item | |
| >>DRB ID | Identity index of DRB |
| >>UL Path Usage Indication | Information about UL usage availability of SN-terminated DRB with respect to M-NG-RAN resource. This IE is used when the concerned DRB has both MCG resource and SCG resource configured i.e. the concerned DRB is configured as split bearer. |

Here, the term 'DRB ID' may indicate an ID for identifying a DRB. The term 'DRB ID' may indicate DRB. The type of DRB may be of an SN-terminated split bearer. 'UL Path Usage Indication' may indicate indication information. The term 'UL Path Usage Indication' may indicate the availability of UL usage related to MCG resources of the MN in the SN-terminated split bearer. According to an embodiment, the indication information may merely indicate whether the UL usage related to the MCG resource is available. According to another embodiment, the indication information may indicate either one of designated values. The designated values may indicate 'unavailable', 'shared', or 'only'. The term 'unavailable' may indicate that MCG is not available for UL data. The indication information may indicate 'shared'. The term 'shared' may indicate that MCG and other MCG are available together for the UL data. The indication information may indicate 'only'. 'only' may indicate that MCG is available for UL data. According to another embodiment, the indication information may include whether the UL related to the MCG resource is available and, when UL is available, a metric (e.g., channel quality) related to the current uplink state. In operation S605, the SN-CP 620 may determine to change the UL path. The SN-CP 620 may identify the current UL primary path. The current UL primary path may refer to a UL primary path configured in the UE 130 for the SN-terminated split bearer. The SN-CP 620 may identify an optimal UL primary path. When the current UL primary path is different from the optimal UL primary path, the SN-CP 620 may determine to change the UL path. According to an embodiment, the SN-CP 620 may identify the optimal UL primary path based on the indication information. The indication information may indicate the availability of the uplink radio network provided by the MN. The UL primary path may be a first path using an MCG resource or a second path using an SCG resource. The first path may refer to an uplink radio network provided by the MN. The second path may refer to an uplink radio network provided by the SN. The availability may be determined by the MN-CP 610. For example, the indication information may indicate that the uplink radio network provided by the MN is available for the SN-terminated split bearer. As another example, the indication information may indicate that the uplink radio network provided by the MN is unavailable for the SN-terminated split bearer.

The SN-CP 620 may identify the optimal UL primary path based on the indication information and the uplink state information of the SN. The uplink state information of the SN may be collected through the wireless network of the SN. For example, the uplink state information of the SN may include a measurement report received from a terminal (e.g., the UE 630) connected to the SN. For example, the SN-CP 620 may indicate that the channel quality of the uplink radio network provided by the SN is lower than a threshold value, and the indication information may indicate that the uplink radio network provided by the MN is available. The SN-CP 620 may identify an uplink radio network provided by the MN, as an optimal UL primary path. As another example, the SN-CP 620 may indicate that the channel quality of the uplink radio network provided by the SN is higher than the threshold value, and the indication information may indicate that the uplink radio network provided by the MN is unavailable. The SN-CP 620 may identify an uplink radio network provided by the SN, as an optimal UL primary path. As another example, the SN-CP 620 may indicate that the channel quality of the uplink radio network provided by the SN is higher than the threshold value, and the indication information may indicate that the uplink radio network provided by the MN with the indication information is available. The SN-CP 620 may identify a currently configured primary path as an optimal UL primary path. When all are possible, it may be advantageous in terms of radio resource management not to unnecessarily change the currently configured UL primary path.

In operation S607, the SN-CP 620 may transmit a bearer context modification request message to the SN-UP 625 through the E1 interface. The bearer context modification request message may include a UL configuration (e.g., the UL configuration IE of 3GPP TS 38.463) of the SCG in the split bearer. This is because the UL primary path has been changed. The UL configuration may indicate whether the SCG can be used for UL traffic. For example, the UL configuration may indicate 'no-data'. The term 'no-data' may indicate that the SCG is not used for UL data. The UL configuration may indicate 'shared'. The term 'shared' may indicate that SCG and other SCG are used together for UL data. The UL configuration may indicate 'only'. The term 'only' may indicate that only SCG is used for UL data. According to an embodiment, the UL configuration may be determined not to conflict with the indication information provided by the MN.

In operation S609, the SN-UP 625 may transmit a bearer context modification response message to the SN-CP 620 through the E1 interface.

In operation S611, the SN-CP 620 may transmit an SN modification request acknowledge message to the MN-CP 610 through the Xn interface. According to an embodiment, the SN modification request message may include PDU session resource modification information. The PDU session resource information may be configured for an SN-terminated split bearer. For example, the PDU session resource modification information may be 'PDU Session Resource Modification Response Info - SN terminated' IE of 3GPP TS 38. 423. The IE may include information related to the PDU session resource, for a request for modifying a DRB configured with an option corresponding to the SN-terminated bearer.

According to an embodiment, an SN modification request confirmation message may include a UL configuration. The PDU session resource information of the SN modification request confirmation message may include a DRB and a UL configuration corresponding to the DRB. This is because the UL primary path has been changed. The UL configuration may indicate whether the SCG may be used for UL traffic. For example, the PDU session resource information may include parameters as shown in the following Table 2.

**[Table 2]**

| **IE Name** | **Semantics description** |
|---|---|
| DRBs To Be Modified List | |
| >DRBs to Be Modified Item | |
| >>DRB ID | Identity index of DRB |
| >>UL Configuration | Information about UL usage of SN-terminated DRB in the S-NG-RAN node. This IE is used when the concerned DRB has both MCG resource and SCG resource configured i.e. the concerned DRB is configured as split bearer. |

Here, the term 'DRB ID' may indicate an ID for identifying a DRB. The term 'DRB ID' may indicate DRB. The type of DRB may be an SN-terminated split bearer. The term 'UL Configuration' may indicate a UL configuration. The 'UL Configuration' may include information on UL usage in the SN-terminated split bearer. For example, the UL configuration may indicate 'no-data''. The term 'no-data' may indicate that SCG is not used for UL data. The UL configuration may refer to 'shared'. The term 'shared' may indicate that SCG and other SCG are used together for UL data. The UL configuration may indicate 'only'. The term 'only' may indicate that only SCG is used for UL data. According to an embodiment, the UL configuration may be determined not to conflict with the indication information provided by the MN. In operation S613, the MN-CP 610 may transmit a bearer context modification request message to the MN-UP 615 through the E1 interface. According to an embodiment, the bearer context modification request message may include a UL configuration. This is because the UL primary path has been changed. The UL configuration may indicate whether the MCG may be used for UL traffic. For example, the UL configuration may indicate 'no-data'. The term 'no-data' may indicate that the MCG is not used for UL data. The UL configuration may refer to 'shared'. The term 'shared' may indicate that MCG and other MCG are used together for the UL data. The UL configuration may indicate 'only'. The term 'only' may indicate that only MCG is used for the UL data. According to an embodiment, the UL configuration may be determined not to conflict with the UL configuration provided by the SN, that is, the UL configuration received from operation S611.

In operation S615, the MN-UP 615 may transmit a bearer context modification response message to the MN-CP 610 through the E1 interface.

In operation S617, the MN-CP 610 may transmit an RRC reconfiguration message to the UE 630. The RRC reconfiguration message may be configured to carry the SN RRC reconfiguration. This is because the settings related to SN have been changed. The RRC reconfiguration message may include a PDCP configuration. The PDCP configuration may include information to indicate the UL primary path. For UL data transmission, the PDCP configuration may include information indicating that two or more RLC entities are associated with one PDCP entity (e.g., "moreThanOneRLC"IE of 3GPP TS 38.331). According to an embodiment, the PDCP configuration may include information on a primary path (e.g., 'primarypath' IE of 3GPP TS 38.331).

In operation S619, the UE 630 may transmit an RRC reconfiguration complete message to the MN-CP 610. The RRC reconfiguration complete message may be configured to carry the SN RRC reconfiguration complete message.

In operation S621, the MN-CP 610 may transmit an SN Reconfiguration Complete message to the SN-CP 620 through the Xn interface. The SN reconfiguration complete message may be configured to carry the SN RRC reconfiguration complete message.

In FIG. 6A, description has been made of an embodiment in which the UL primary path is determined based on the indication information of the MN in the SN-terminated split bearer. According to further embodiments, the indication information may be used to determine a value of other parameters of the PDCP configuration as well as the UL primary path. According to an embodiment, the split threshold (e.g., ul-DataSplitThreshold of 3GPP TS 38.331) of the PDCP configuration may be determined based on the indication information.

In FIG. 6A, description is made of an operation for configuring an UL primary path of an SN-terminated bearer in a structure in which a base station is separated into a DU, a CU-UP and a CU-CP. However, example embodiments may also be applied to a structure in which a base station is separated into only a DU and a CU (e.g., a structure that CU-CP and CU-UP are not separated) or to a structure that the base station is not separated. In such an occasion, some operations may be omitted. For example, in the structure that the CU-CP and the CU-UP are not separated, operation S607, operation S609, operation S613, and/or operation S615 may be omitted.

FIG. 6B illustrates another example of signaling for controlling a UL path of an SN-terminated split bearer according to embodiments. In FIG. 6A, it has been identified that the UL primary path is changed in response to the SN-CP 620 receiving the indication information. However, the operation of changing the optimal primary path of the SN-CP 620 may be performed after performing the SN modification request procedure. In this case, it is required to change the UL configuration by the SN-CP 620. An MN-CP 610, an MN-UP 615, an SN-CP 620, an SN-UP 625, or a UE 630 are illustrated as nodes for the path control. The description of each node and the interface between nodes described above with reference to FIGS. 2 to 5 may be applied to the MN-CP 610, the MN-UP 615, the SN-CP 620, the SN-UP 625, or the UE 630.

Referring to FIG. 6B, in operation S651, the MN-CP 610 may receive a measurement report or a medium access control (MAC) instruction. Operation S651 may correspond to operation S601 of FIG. 6A. The description of operation S601 in FIG. 6A may be applied to operation S651 in the same or similar manner.

In operation S653, the MN-CP 610 may transmit an SN modification request message to the SN-CP 620 through the Xn interface. Operation S653 may correspond to operation S603 of FIG. 6A. The description of operation S603 in FIG. 6A may be applied to operation S653 in the same or similar manner.

In operation S655, the SN-CP 620 may transmit an SN modification request acknowledge message to the MN-CP 610 through the Xn interface. The SN-CP 620 may transmit an SN modification request confirmation message to the MN-CP 610 in response to the SN modification request message. Unlike FIG. 6A, since it is before the UL primary path is changed, the SN modification request confirmation message may not include the UL configuration.

In operation S657, the SN-CP 620 may determine to change a UL path. The SN-CP 620 may identify a current UL primary path. The current UL primary path may refer to a UL primary path configured in the UE 630 for the SN-terminated split bearer. The SN-CP 620 may identify an optimal UL primary path. When the current UL primary path is different from the optimal UL primary path, the SN-CP 620 may determine to change the UL path. According to an embodiment, the SN-CP 620 may identify the optimal UL primary path based on the indication information. The indication information may indicate the availability of the uplink radio network provided by the MN. The UL primary path may be a first path using the MCG resource or a second path using the SCG resource. The first path may refer to an uplink radio network provided by the MN. The second path may refer to an uplink radio network provided by the SN. The availability may be determined by the MN-CP 610. For example, the indication information may indicate that the uplink radio network provided by the MN is available for the SN-terminated split bearer. As another example, the indication information may indicate that the uplink radio network provided by the MN is unavailable for the SN-terminated split bearer. Operation S657 may correspond to operation S605 of FIG. 6A. The description of operation S605 in FIG. 6A may be applied to operation S657 in the same or similar manner.

In operation S659, the SN-CP 620 may transmit an SN modification required message to the MN-CP 610 through the Xn interface. According to an embodiment, the SN modification required message may include PDU session resource modification information. The PDU session resource information may be configured for an SN-terminated split bearer. For example, the PDU session resource modification information may be 'PDU Session Resource Modification Required Info - SN terminated' IE of 3GPP TS 38.423. The IE may include information related to the PDU session resource, for a request for modifying a DRB configured with an option corresponding to the SN-terminated bearer. The request may be initiated by an S-NG-RAN node. For example, the SN modification required message may be referred to as the SN modification message.

According to an embodiment, the SN modification required message may include a UL configuration. The PDU session resource information of the SN modification required message may include the DRB and the UL configuration corresponding to the DRB. This is because the UL primary path has been changed. The UL configuration may indicate whether the SCG may be used for UL traffic. For example, the PDU session resource information may include parameters as shown in the following Table 3.

**[Table 3]**

| **IE Name** | **Semantics description** |
|---|---|
| DRBs To Be Modified List | |
| >DRBs to Be Modified Item | |
| >>DRB ID | Identity index of DRB |
| >>UL Configuration | Information about UL usage of SN-terminated DRB in the S-NG-RAN node. This IE is used when the concerned DRB has both MCG resource and SCG resource configured i.e. the concerned DRB is configured as split bearer. |

Here, the term 'DRB ID' may indicate an ID for identifying a DRB. The term 'DRB ID' may indicate DRB. The type of DRB may be an SN-terminated split bearer. The term 'UL Configuration' may indicate a UL configuration. The term 'UL Configuration' may include information on UL usage in the SN-terminated split bearer. For example, the UL configuration may indicate 'no-data'. The term 'no-data' may indicate that SCG is not used for UL data. The UL configuration may indicate 'shared'. The term 'shared' may indicate that SCG and other SCG are used together for UL data. The UL configuration may indicate 'only'. The term 'only' may indicate that only SCG is used for the UL data. According to an embodiment, the UL configuration may be determined not to conflict with the indication information provided by the MN. In operation S661, the MN-CP 610 may transmit a bearer context modification request message to the MN-UP 615 through the E1 interface. Operation S661 may correspond to operation S613 of FIG. 6A. The description of operation S613 in FIG. 6A may be applied to operation S661 in the same or similar manner.

In operation S663, the MN-UP 615 may transmit a bearer context modification response message to the MN-CP 610 through the E1 interface.

In operation S665, the MN-CP 610 may transmit an RRC reconfiguration message to the UE 630. Operation S665 may correspond to operation S617 in FIG. 6A. The description of operation S617 in FIG. 6A may be applied to operation S665 in the same or similar manner.

In operation S667, the UE 630 may transmit an RRC reconfiguration complete message to the MN-CP 610. The RRC reconfiguration complete message may be configured to carry the SN RRC reconfiguration complete message.

In operation S669, the MN-CP 610 may transmit an SN modification confirm message to the SN-CP 620 through the Xn interface. The SN modification confirm message may be configured to carry the SN RRC reconfiguration complete message.

In operation S671, the SN-CP 620 may transmit a bearer context modification request message to the SN-UP 625 through the E1 interface. Operation S671 may correspond to operation S607 of FIG. 6A. The description of operation S607 of FIG. 6A may be applied to operation S671 in the same or similar manner.

In operation S673, the SN-UP 625 may transmit a bearer context modification response message to the SN-CP 620 through the E1 interface.

In FIG. 6B, description has been made of an embodiment in which the UL primary path is determined based on the indication information of the MN in the SN-terminated split bearer. According to further embodiments, the indication information may be used to determine values of other parameters of the PDCP configuration as well as the UL primary path. According to an embodiment, the split threshold value (e.g., ul-DataSplitThreshold of 3GPP TS 38.331) of the PDCP configuration may be determined based on the indication information.

In FIG. 6B, description has been made of an operation for configuring an UL primary path of an SN-terminated bearer in a structure in which a base station is separated into a DU, a CU-UP and a CU-CP. However, example embodiments may also be applied to a structure that the base station is separated into only a DU and a CU (e.g., a structure in which CU-CP and CU-UP are not separated) or a structure that the base station is not separated. In such a case, some operations may be omitted. For example, in a structure that the CU-CP and the CU-UP are not separated, operation S661, operation S663, operation S671, and/or operation S673 may be omitted.

FIG. 7A illustrates an example of signaling for controlling a UL path of a master node (MN)-terminated split bearer according to embodiments. An MN-CP 710, an MN-UP 715, an SN-CP 720, an SN-UP 725, or a UE 730 are illustrated as nodes for the UL path control. The description of each node and the interface between nodes described above with reference to FIGS. 2 to 5 may be also applied to the MN-CP 710, the MN-UP 715, the SN-CP 720, the SN-UP 725, or the UE 730.

Referring to FIG. 7A, in operation S701, the SN-CP 720 may receive a measurement report or a medium access control (MAC) instruction. The measurement report may include at least one of a measurement result for a serving cell of the SN or a measurement result for a neighboring cell. The measurement result may indicate a radio status of the uplink channel of the SN. The MAC indication may include a downlink data delivery status (DDDS). The purpose of delivering the DDDS is to provide feedback to a node hosting the NR PDCP entity from a corresponding node so that the node hosting the NR PDCP entity may control the downlink user data flow through the corresponding node for each data radio bearer. According to an embodiment, the SN-CP 720 may determine whether the UL path using the SCG is available, based on at least one of the measurement report or the MAC indication.

In operation S703, the SN-CP 720 may transmit an SN modification required message to the MN-CP 710 through the Xn interface. According to embodiments, the SN modification required message may include indication information. The indication information may include information on usage of the UL path. The indication information may indicate whether the MCG resource or the SCG resource is available for the UL path in the split bearer, that is, the availability. The PDCP of the MN-terminated split bearer is positioned in the MN, and the RLC and the MAC of the MN-terminated split bearer are positioned in both the MN and the SN. In order to determine the optimal UL primary path, the MN-CP 710 requires information on the uplink radio channel in the SN in addition to the MN. The SN-CP 720 may determine whether the UL path using the SCG is available. As the determination of the SN-CP 720 is provided to the MN, the MN may identify the optimal UL primary path more accurately. For example, the SN modification required message may be referred to as the SN modification message.

According to an embodiment, the SN modification required message may include PDU session resource modification information. The PDU session resource information may be configured for an MN-terminated split bearer. For example, the PDU session resource modification information may be 'PDU Session Resource Modification Required Info - MN terminated' of 3GPP TS 38.423. The IE may include information related to the PDU session resource, for a request for modifying a DRB configured with an option corresponding to an MN-terminated bearer. The request may be initiated by an S-NG-RAN node.

According to an embodiment, the PDU session resource information may include a DRB and indication information corresponding to the DRB. The indication information may indicate whether the MCG resource is available for an UL path in the DRB. For example, the PDU session resource information may include parameters as shown in the following Table 4.

**[Table 4]**

| **IE Name** | **Semantics description** |
|---|---|
| DRBs To Be Modified List | |
| >DRBs to Be Modified Item | |
| >>DRB ID | Identity index of DRB |
| >>UL Path Usage Indication | Information about UL usage availability of MN-terminated DRB with respect to S-NG-RAN resource. This IE is used when the concerned DRB has both MCG resource and SCG resource configured i.e. the concerned DRB is configured as split bearer. |

Here, the term 'DRB ID' may indicate an ID for identifying the DRB. The term 'DRB ID' may indicate the DRB. The type of DRB may be an MN-terminated split bearer. The term 'UL Path Usage Indication' may indicate indication information. The term 'UL Path Usage Indication' may indicate availability of UL usage related to SCG resources of the MN in the MN-terminated split bearer. According to an embodiment, the indication information may simply indicate whether the UL related to the SCG resource is available. According to another embodiment, the indication information may indicate one of designated values. The designated values may indicate 'unavailable', 'shared', and 'only'. The term 'unavailable' may indicate that the SCG is not available (i.e., disabled, deactivated) for the UL data. The indication information may indicate 'shared'. The term 'shared' may indicate that SCG and other CGs (e.g., MCG) are available (i.e., enabled, activated) together for the UL data. The indication information may indicate 'only'. The term 'only' may indicate that the SCG is available for the UL data. According to another embodiment, the indication information may include both whether the UL related to the SCG resource is available, and a metric (e.g., channel quality) associated with the current uplink status, when the UL is available. In operation S705, the MN-CP 710 may determine to change the UL path. The MN-CP 710 may identify the current UL primary path. The current UL primary path may refer to a UL primary path configured in the UE 730 for the MN-terminated split bearer. The MN-CP 710 may identify an optimal UL primary path. When the current UL primary path is different from the optimal UL primary path, the MN-CP 710 may determine to change the UL path. According to an embodiment, the MN-CP 710 may identify the optimal UL primary path based on the indication information. The indication information may indicate the availability of the uplink radio network provided by the MN. The UL primary path may be a first path using an MCG resource or a second path using an SCG resource. The first path may refer to an uplink radio network provided by an MN. The second path may refer to an uplink radio network provided by the SN. The availability may be determined by SN-CP 720. For example, the indication information may indicate that the uplink radio network provided by the SN is available for the MN-terminated split bearer. As another example, the indication information may indicate that the uplink radio network provided by the SN is unavailable for the MN-terminated split bearer.

The MN-CP 710 may identify an optimal UL primary path based on the indication information and the uplink state information of the MN. The uplink status information of the MN may be collected through the radio network of the MN. For example, the uplink status information of the MN may include a measurement report received from a terminal (e.g., the UE 730) connected to the MN. For example, the MN-CP 710 may indicate that the channel quality of the uplink radio network provided by the SN is lower than a threshold value, and the indication information may indicate that the uplink radio network provided by the SN is available. The MN-CP 710 may identify the uplink radio network provided by the SN as an optimal UL primary path. As another example, the MN-CP 710 may indicate that the channel quality of the uplink radio network provided by the MN is higher than the threshold value, and the indication information may indicate that the uplink radio network provided by the SN is unavailable. The MN-CP 710 may identify the uplink radio network provided by the MN as an optimal UL primary path. As another example, the MN-CP 710 may indicate that the channel quality of the uplink radio network provided by the MN is higher than the threshold value, and the indication information may indicate that the uplink radio network provided by the SN is available. The MN-CP 710 may identify a currently set primary path as an optimal UL primary path. When all are available, it may be advantageous in terms of radio resource management not to unnecessarily change the currently set UL primary path.

In operation S707, the MN-CP 710 may transmit a bearer context modification request message to the MN-UP 715 through the E1 interface. According to an embodiment, a bearer context modification request confirmation message may include a UL configuration. This is because the UL primary path has been changed. The UL configuration may indicate whether the MCG is available for UL traffic. For example, the UL configuration may indicate 'no-data'. The term 'no-data' may indicate that MCG is not used for UL data. The UL configuration may indicate 'shared'. The term 'shared' may indicate that MCG and other MCG are used together for UL data. The UL configuration may indicate 'only'. The term 'only' may indicate that only MCG is used for the UL data. According to an embodiment, the UL configuration may be determined not to conflict with the UL configuration provided by the SN, that is, the UL configuration received from operation S703.

In operation S709, the MN-UP 715 may transmit a bearer context modification response message to the MN-CP 710 through the E1 interface.

In operation S711, the MN-CP 710 may transmit an SN modification request message to the SN-CP 720 through the Xn interface. According to an embodiment, the SN modification request message may include PDU session resource modification information. The PDU session resource information may be configured for an MN-terminated split bearer. For example, the PDU session resource modification information may be 'PDU Session Resource Modification Response Info - SN terminated' IE of 3GPP TS 38.423. The IE may include information related to the PDU session resource, for a request for modifying a DRB configured with an option corresponding to the MN-terminated bearer.

According to an embodiment, the SN modification request message may include a UL configuration. The PDU session resource information of the SN modification request message may include a DRB and a UL configuration corresponding to the DRB. This is because the UL primary path has been changed. The UL configuration may indicate whether the SCG may be used for UL traffic. For example, the PDU session resource information may include parameters as shown in the following Table 5.

**[Table 5]**

| **IE Name** | **Semantics description** |
|---|---|
| DRBs To Be Modified List | |
| >DRBs to Be Modified Item | |
| >>DRB ID | Identity index of DRB |
| >>UL Configuration | Information about UL usage of MN-terminated DRB in the M-NG-RAN node. This IE is used when the concerned DRB has both MCG resource and SCG resource configured i.e. the concerned DRB is configured as split bearer. |

Here, the term 'DRB ID' may indicate an ID for identifying a DRB. The term 'DRB ID' may indicate a DRB. The type of DRB may be an MN-terminated split bearer. The term 'UL Configuration' may indicate a UL configuration. The term 'UL Configuration' may include information on UL usage in the MN-terminated split bearer. For example, the UL configuration may indicate 'no-data'. The term 'no-data' may indicate that MCG is not used for UL data. The UL configuration may indicate 'shared'. The term 'shared' may indicate that MCG and other MCG are used together for the UL data. The UL configuration may indicate 'only'. The term 'only' may indicate that only MCG is used for the UL data. According to an embodiment, the UL configuration may be determined not to conflict with the indication information provided by the SN. In operation S713, the SN-CP 720 may transmit an SN modification request acknowledge message to the MN-CP 710 through the Xn interface.

In operation S715, the MN-CP 710 may transmit an RRC reconfiguration message to the UE 730. The RRC reconfiguration message may be configured to carry the SN RRC reconfiguration message. This is because the settings related to the SN have been changed. The RRC reconfiguration message may include a PDCP configuration. The PDCP configuration may include information for indicating the UL primary path. For UL data transmission, the PDCP configuration may include information indicating that two or more RLC entities are associated with one PDCP entity (e.g., 'moreThanOneRLC' IE of 3GPP TS 38.331). According to an embodiment, the PDCP configuration may include information on the primary path (e.g., 'primarypath' IE of 3GPP TS 38.331).

In operation S717, the UE 730 may transmit an RRC reconfiguration complete message to the MN-CP 710. The RRC reconfiguration complete message may be configured to carry the SN RRC reconfiguration complete message.

In operation S719, the MN-CP 710 may transmit an SN modification confirm message to the SN-CP 720 through the Xn interface. The SN modification confirm message may be configured to carry the SN RRC reconfiguration complete message.

In FIG. 7A, description has been made of an embodiment that the UL primary path is determined based on the indication information of the MN in the MN-terminated split bearer. According to further embodiments, the indication information may be used to determine values of other parameters of the PDCP configuration as well as the UL primary path. According to an embodiment, the split threshold value (e.g., ul-DataSplitThreshold of 3GPP TS 38.331) of the PDCP configuration may be determined based on the indication information.

In FIG. 7A, description has been made of operation for configuring an UL primary path of an MN-terminated bearer in a structure in which a base station is separated into a DU, a CU-UP, and a CU-CP. However, example embodiments may also be applied to a structure in which the base station is separated into only a DU and a CU (e.g., a structure in which CU-CP and CU-UP are not separated) or a structure in which the base station is not separated. In such an occasion, some operations may be omitted. For example, in a structure that the CU-CP and the CU-UP are not separated, operation S707 and operation S709 may be omitted.

FIG. 7B illustrates another example of signaling for controlling a UL path of an MN-terminated split bearer according to embodiments. In FIG. 7A, it is identified a change in the UL primary path in response to the MN-CP 710 receiving the indication information. However, the operation of changing the optimal primary path of the MN-CP 710 may be performed after the SN modification request procedure. An MN-CP 710, an MN-UP 715, an SN-CP 720, an SN-UP 725, or a UE 730 are illustrated as nodes for the UL path control. The description of each node and the interface between nodes described above with reference to FIGS. 2 to 5 may be applied to the MN-CP 710, the MN-UP 715, the SN-CP 720, the SN-UP 725, or the UE 730.

Referring to FIG. 7B, in operation S751, the SN-CP 720 may receive a measurement report or a medium access control (MAC) indication. Operation S751 may correspond to operation S701 of FIG. 7A. The description of operation S701 in FIG. 7A may be also applied to operation S751 in the same or similar manner.

In operation S753, the SN-CP 720 may transmit an SN modification required message to the MN-CP 710 through the Xn interface. According to embodiments, the SN modification required message may include indication information. The indication information may include information on usage of the UL path. The indication information may indicate whether the MCG resource or the SCG resource is available for the UL path in the split bearer, that is, its availability. Operation S753 may correspond to operation S703 of FIG. 7A. The description of operation S703 in FIG. 7A may be also applied to operation S753 in the same or similar manner.

In operation S755, the MN-CP 710 may determine to change the UL path. The MN-CP 710 may identify a current UL primary path. The current UL primary path may refer to a UL primary path configured in the UE 730 for the MN-terminated split bearer. The MN-CP 710 may identify an optimal UL primary path. When the current UL primary path is different from the optimal UL primary path, the MN-CP 710 may determine to change the UL path. Conversely, when the current UL primary path and the optimal UL primary path are the same, the MN-CP 710 may not determine to change the UL path. In FIG. 7B, description is made of signaling in which an operation according to the UL path change is performed independently of an SN modification required procedure. FIG. 7B illustrates that the operation of determining the UL path change is performed during the SN modification required procedure, but embodiments of the disclosure are not limited thereto. According to an embodiment, operation S755 may be performed after operation S757. Even if the SN-CP 720 transmits the instruction information to the MN-CP 710 through the SN modification required procedure, the MN-CP 710 may determine the UL configuration of the split bearer by an independent procedure (e.g., the SN modification request procedure). As such, the MN-CP 710 may first perform operation S757.

In operation S757, the MN-CP 710 may transmit an SN modification confirm message to the SN-CP 720 through the Xn interface. Since there is no change in the UL primary path during the SN modification required procedure, it is not required to transmit an RRC message for the purpose of changing the UL path. As such, the MN-CP 710 may transmit the SN modification confirm message to the SN-CP 720 in response to the SN modification required message.

In operation S759, the MN-CP 710 may transmit an SN modification request message to the SN-CP 720 through the Xn interface. According to an embodiment, the SN modification request message may include PDU session resource modification information. The PDU session resource information may be configured for an MN-terminated split bearer. For example, the PDU session resource modification information may be 'PDU Session Resource Modification Response Info - SN terminated' IE of 3GPP TS 38.423. The IE may include information related to the PDU session resource, for a request for modifying a DRB configured with an option corresponding to the MN-terminated bearer.

According to an embodiment, the SN modification request message may include a UL configuration. The PDU session resource information of the SN modification request message may include a DRB and a UL configuration corresponding to the DRB. This is because the UL primary path has been changed. The UL configuration may indicate whether the SCG may be used for UL traffic. For example, the PDU session resource information may include parameters as shown in the following Table 6.

**[Table 6]**

| **IE Name** | **Semantics description** |
|---|---|
| DRBs To Be Modified List | |
| >DRBs to Be Modified Item | |
| >>DRB ID | Identity index of DRB |
| >>UL Configuration | Information about UL usage of MN-terminated DRB in the M-NG-RAN node. This IE is used when the concerned DRB has both MCG resource and SCG resource configured i.e. the concerned DRB is configured as split bearer. |

Here, the term 'DRB ID' may indicate an ID for identifying a DRB. The term 'DRB ID' may indicate the DRB. The type of DRB may be an MN-terminated split bearer. The term 'UL Configuration' may indicate a UL configuration. The term 'UL Configuration' may include information on UL usage in the MN-terminated split bearer. For example, the UL configuration may indicate 'no-data. The term 'no-data' may indicate that MCG is not used for UL data. The UL configuration may refer to 'shared'. The term 'shared' may indicate that MCG and other MCG are used together for the UL data. The UL configuration may indicate 'only'. The term 'only' may indicate that only MCG is used for the UL data. According to an embodiment, the UL configuration may be determined not to conflict with the indication information provided by the SN. In operation S761, the SN-CP 720 may transmit a bearer context modification request message to the SN-UP 725 through the E1 interface. The bearer context modification request message may include the UL configuration (e.g., a UL configuration IE of TS 38.463 of 3GPP) of the SCG in the split bearer. This is because the UL primary path has been changed. The UL configuration may indicate whether the SCG is available for UL traffic. For example, the UL configuration may indicate 'no-data'. The term 'no-data' may indicate that SCG is not available for UL data. The UL configuration may refer to 'shared'. The term 'shared' may indicate that SCG and other SCG are available together for UL data. The UL configuration may indicate 'only'. The term 'only' may indicate that only SCG is used for UL data. According to an embodiment, the UL configuration may be determined not to conflict with the indication information provided by the MN.

In operation S763, the SN-UP 725 may transmit a bearer context modification response message to the SN-CP 720 through the E1 interface.

In operation S765, the SN-CP 720 may transmit an SN modification request acknowledge message to the MN-CP 710 through the Xn interface.

In operation S767, the MN-CP 710 may transmit a bearer context modification request message to the MN-UP 715 through the E1 interface. Operation S767 may correspond to operation S707 of FIG. 7A. The description of operation S707 in FIG. 7A may be also applied to operation S767 in the same or similar manner.

In operation S769, the MN-UP 715 may transmit a bearer context modification response message to the MN-CP 710 through the E1 interface.

In operation S771, the MN-CP 710 may transmit an RRC reconfiguration message to the UE 730. Operation S771 may correspond to operation S715 of FIG. 7A. The description of operation S715 in FIG. 7A may be also applied to operation SS771 in the same or similar manner.

In operation S773, the UE 730 may transmit an RRC reconfiguration complete message to the MN-CP 710. Operation S773 may correspond to operation S717 of FIG. 7A. The description of operation S717 in FIG. 7A may be also applied to operation S773 in the same or similar manner.

In operation S775, the MN-CP 710 may transmit an SN reconfiguration complete message to the SN-CP 720 through the Xn interface. The SN reconfiguration complete message may be configured to carry the SN RRC reconfiguration complete message.

In FIG. 7B, description has been made of an embodiment in which the UL primary path is determined based on the indication information of the MN in the MN-terminated split bearer. According to further embodiments, the indication information may be used to determine values of other parameters of the PDCP configuration as well as the UL primary path. According to an embodiment, the split threshold value (e.g., ul-DataSplitThreshold of TS 38.331 of 3GPP) of the PDCP configuration may be determined based on the indication information.

Further, in FIG. 7B, description has been made of an operation for configuring the UL primary path of the MN-terminated bearer in a structure in which a base station is separated into a DU, a CU-UP, and a CU-CP. However, example embodiments may also be applied to a structure in which the base station is separated into only a DU and a CU (e.g., a structure that the CU-CP and the CU-UP are not separated) or a structure that the base station is not separated. In this case, some operations may be omitted. For example, in a structure that the CU-CP and the CU-UP are not separated, operation S761, operation S763, operation S767, and operation S769 may be omitted.

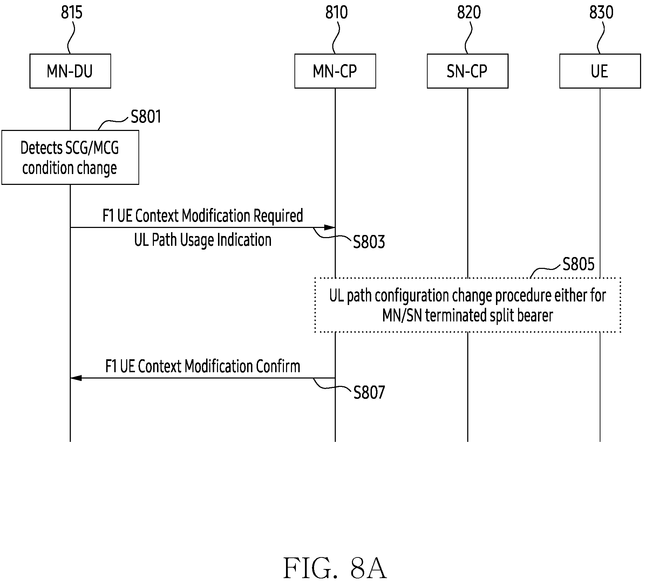

FIG. 8A illustrates an example of CU-DU signaling for controlling a UL path of an SN-terminated split bearer according to embodiments. An MN-CP 810, an MN-DU 815, an SN-CP 820, or a UE 830 are illustrated as nodes for the path control. The description of each node and the interface between nodes described above with reference to FIGS. 2 to 5 may be applied to the MN-CP 810, the MN-DU 815, the SN-CP 820, or the UE 830.

Referring to FIG. 8A, in operation S801, the MN-DU 815 may detect that a condition of the cell group is changed. The condition of the cell group may refer to parameters for a cell group associated with the current split bearer (e.g., the SN-terminated split bearer) or designated metrics for the cell group. According to an embodiment, the condition of the cell group may be configured based on channel-related metrics such as radio resource usage in each cell group (e.g., MCG or SCG), radio resource availability in each cell group, or channel quality of a cell (e.g., PCell or PSCell) in each cell group. Further, according to an embodiment, the condition of the cell group may be configured based on the equipment condition of a node providing the cell group. For example, when the equipment of the current node has a mechanical defect or it has any difficulty to provide an uplink frequency, the cell group of the current node may not be suitable as the UL primary path.

The above-described examples, a combination of the examples, or the metrics having a similar technical meaning may be defined as a condition of a cell group. The MN-DU 815 may detect a change in the condition of the cell group. According to an embodiment, the MN-DU 815 may identify that parameters or metrics related to the MCG resource are changed.

When the condition of the cell group is changed, the MN-DU 815 is required to inform the CU of the condition of the cell group. This is because the PDCP is disposed in the CU. The MN-DU 815 may inform the CU of whether the current cell group is sufficient to support the UL path in order to help the CU determine whether to change the UL primary path.

In operation S803, the MN-DU 815 may transmit a UE context modification required message to the MN-CP 810 through the F1 interface. For example, the UE context modification required message may be referred to as the UE context modification message. The MN-DU 815 may generate indication information to notify the condition of the current cell group. When the state of the MCG resource is changed, the MN-DU 815 may generate the indication information to inform the CU of the availability of UL usage of the MCG. The MN-DU 815 may generate the UE context modification required message including the indication information. According to an embodiment, the UE context modification required message may include a DRB and indication information corresponding to the DRB. The indication information may indicate whether the MCG resource may be used as an UL path in the DRB. For example, the UE context modification required message may include parameters as shown in the following Table 7.

**[Table 7]**

| **IE Name** | **Semantics description** |
|---|---|
| Message Type | |
| gNB-CU UE F1AP ID | |
| gNB-DU UE F1AP ID | |
| DRB Required To Be Modified List | |
| >DRB Required to Be Modified Item | |
| >>DRB ID | Identity index of DRB |
| >>UL Path Usage Indication | Indication of UL Path usage preference by DU for the respective DRB |

Herein, the term 'Message Type' may indicate the type of a transmitted message (e.g., Initiating Message, Successful Outcome, Unsuccessful Outcome). The term 'gNB-CU UE F1AP ID' may indicate an ID for identifying a UE in an F1AP interface of a gNB-CU. The term 'gNB-DU UE F1AP ID' may indicate an ID for identifying a UE in an F1AP interface of a gNB-DU. The term 'DRB ID' may indicate an ID for identifying a DRB. The term 'DRB ID' may indicate the DRB. The DRB may be an SN-terminated split bearer. The term 'UL Path Usage Indication' may indicate indication information. The term 'UL Path Usage Indication' may indicate the availability of UL usage related to MCG resources of the MN in the SN-terminated split bearer. According to an embodiment, the indication information may simply indicate whether the UL usage related to the MCG resource is available. According to another embodiment, the indication information may indicate one of designated values. The designated values may indicate 'unavailable', 'shared', and 'only'. The term 'unavailable' may indicate that MCG is not available for UL data. The indication information may indicate 'shared'. The term 'shared' may indicate that the MCG and other MCG are available together for the UL data. The indication information may indicate 'only'. The term 'only' may indicate that MCG is available for the UL data. According to another embodiment, the indication information may include both whether the UL related to the MCG resource is available, and metrics (e.g., channel quality) related to the current uplink state, when the UL usage is available. In operation S805, the MN-CP 810, the SN-CP 820, and the UE 830 may perform a UL path change procedure for a radio bearer. According to an embodiment, the radio bearer may be an SN-terminated split bearer. The description of FIGS. 6A to 6B may be also applied to the MN-CP 810, the SN-CP 820, and the UE 830. According to an embodiment, the radio bearer may be an MN-terminated split bearer. The description of FIGS. 7A to 7B may be also applied to the MN-CP 810, the SN-CP 820, and the UE 830.

In operation S807, the MN-CP 810 may transmit a UE context modification confirm message to the MN-DU 815 through the F1 interface.

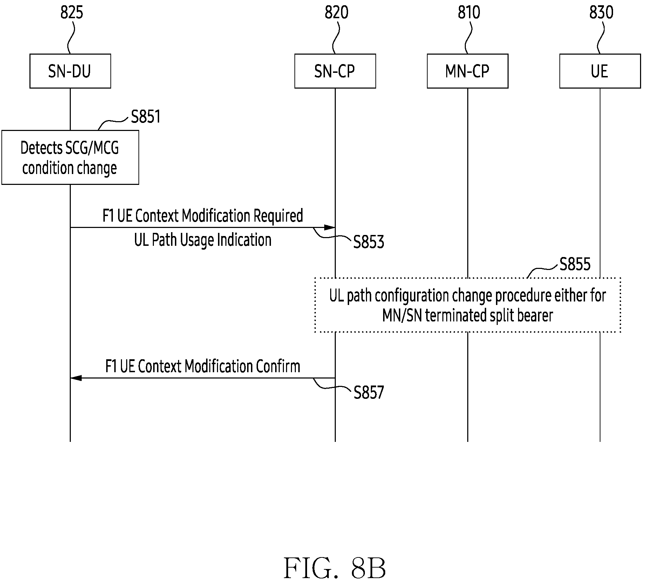

FIG. 8B illustrates an example of CU-DU signaling for controlling a UL path of an MN-terminated split bearer according to embodiments. An MN-CP 810, an SN-CP 820, an SN-DU 825, or a UE 830 are illustrated as nodes for the path control. The description of each node and the interface between the nodes described above with reference to FIGS. 2 to 5 may be applied to the MN-CP 810, the SN-CP 820, the SN-DU 825, or the UE 830.

Referring to FIG. 8B, in operation S851, the SN-DU 825 may detect that the condition of the cell group is changed. The condition of the cell group may refer to parameters for a cell group associated with a current split bearer (e.g., an MN-terminated split bearer) or designated metrics for the cell group. According to an embodiment, the condition of the cell group may be configured based on channel-related metrics such as radio resource usage in each cell group (e.g., MCG or SCG), radio resource availability in each cell group, and channel quality of a cell (e.g., PCell or PSCell) in each cell group. Further, according to an embodiment, the condition of the cell group may be configured based on the equipment state of the node providing the cell group. For example, when there is any mechanical defect in the equipment of the current node or it is difficult for the equipment to provide an uplink frequency, the cell group of the current node would not be suitable as the UL primary path.

The above-described examples, a combination of examples, or metrics having a similar technical meaning thereto may be defined as a condition of a cell group. The SN-DU 825 may detect a change in the condition of the cell group. According to an embodiment, the SN-DU 825 may identify that parameters or metrics related to the MCG resource is changed.

When the cell group changing condition is satisfied, the SN-DU 825 is required to inform a CU of the condition of the cell group. This is because the PDCP is disposed in the CU. The SN-DU 825 may inform the CU of whether the current cell group is sufficient to support the UL path in order to help the CU determine whether to change the UL primary path.

In operation S853, the SN-DU 825 may transmit a UE context modification required message to the SN-CP 820 through the F1 interface. For example, the UE context modification required message may be referred to as the UE context modification message. The SN-DU 825 may generate indication information to notify the condition of the current cell group. When the condition of the SCG resource is changed, the SN-DU 825 may generate the indication information to inform the CU of the availability of UL usage of the SCG. The SN-DU 825 may generate a UE context modification required message including the indication information. According to an embodiment, the UE Context Modification Confirm message may include a DRB and indication information corresponding to the DRB. The indication information may indicate whether the SCG resource in the DRB is available as a UL path. For example, the UE Context Modification Confirm message may include parameters as shown in the following Table 8.

**[Table 8]**

| **IE Name** | **Semantics description** |
|---|---|
| Message Type | |
| gNB-CU UE F1AP ID | |
| gNB-DU UE F1AP ID | |
| DRB Required To Be Modified List | |
| >DRB Required to Be Modified Item | |
| >>DRB ID | Identity index of DRB |
| >>UL Path Usage Indication | Indication of UL Path usage preference by DU for the respective DRB |

Herein, the term 'Message Type' may indicate the type of a transmitted message (e.g., Initiating Message, Successful Outcome, Unsuccessful Outcome). The term 'gNB-CU UE F1AP ID' may indicate an ID for identifying a UE in an F1AP interface of the gNB-CU. The term 'gNB-DU UE F1AP ID' may indicate an ID for identifying a UE in the F1AP interface of the gNB-DU. The term 'DRB ID' may indicate an ID for identifying a DRB. The term 'DRB ID' may indicate a DRB. The DRB may be an MN-terminated split bearer. The term 'UL Path Usage Indication' may indicate indication information. The term 'UL Path Usage Indication' may indicate the availability of UL usage related to the SCG resource of the SN in the MN-terminated split bearer. According to an embodiment, the indication information may simply indicate whether the UL usage related to the SCG resource is available. According to another embodiment, the indication information may indicate one of designated values. The designated values may indicate 'unavailable', 'shared', and 'only'. The term 'unavailable' may indicate that the SCG is not available for UL data. The indication information may indicate 'shared'. The term 'shared' may indicate that the SCG and other SCG are available together for the UL data. The indication information may indicate 'only'. The term 'only' may indicate that the SCG is available for the UL data. According to another embodiment, the indication information may include both whether the UL usage associated with the SCG resource is available, and when UL is available, a metrics (e.g., channel quality) associated with the current uplink state. In operation S855, the MN-CP 810, the SN-CP 820, and the UE 830 may perform a UL path change procedure for the radio bearer. According to an embodiment, the radio bearer may be an SN-terminated split bearer. The description of FIGS. 6A to 6B may be also applied to the MN-CP 810, the SN-CP 820, and the UE 830. According to an embodiment, the radio bearer may be an MN-terminated split bearer. The description of FIGS. 7A to 7B may be also applied to the MN-CP 810, the SN-CP 820, and the UE 830.

In operation S857, the SN-CP 820 may transmit a UE Context Modification Confirm message to the SN-DU 825 through the F1 interface.

In FIGS. 6A to 8B, description has been made of the IE (e.g., UL Path Usage Indication IE) indicating the availability of a UL path in a corresponding node included in a previously defined message, but embodiments are not limited thereto. In addition to the new IE, a new message may be defined. A separate message may be defined for resource coordination of the MN and the SN. That is, the new message to be described later may be not only transmitted from node to node to recommend a UL primary path, but also used for other operations requiring resource adjustment. For example, when selecting an optimal band combination in the NR-DC scenario, the MN is required to know band information supported in the SN and information on a neighboring cell operated in the SN. Accordingly, the MN may receive a message related to the radio status in the SN from the SN. The MN may select an appropriate PSCell to optimize the band combination of NR-DC and NR SA.

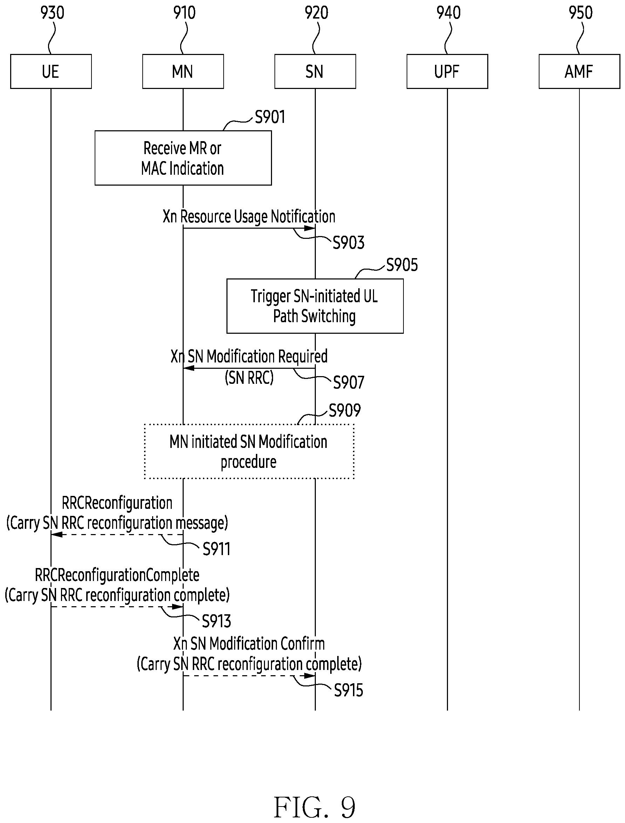

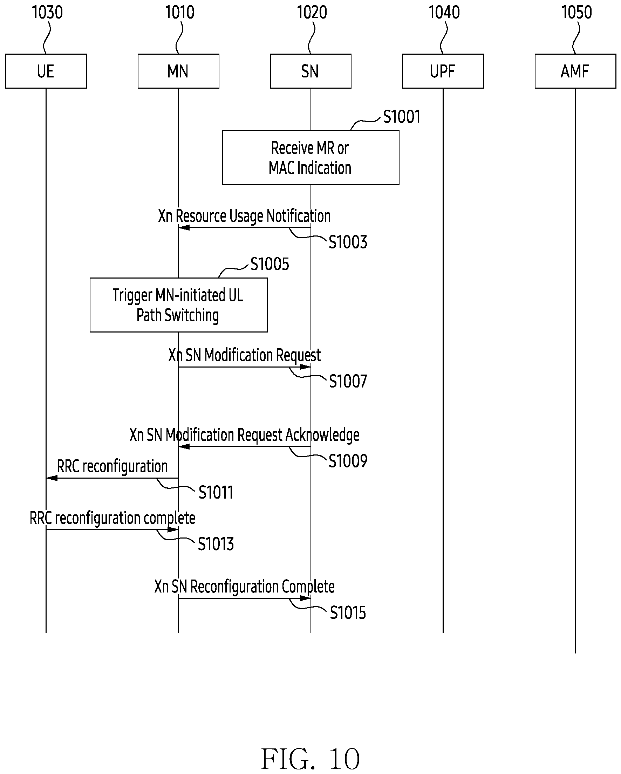

Hereinafter, description will be made of messages for indicating availability of UL path usage according to example embodiments, with reference to FIGS. 9 and 10.

FIG. 9 illustrates an example of a message for controlling a UL path of an SN-terminated split bearer according to embodiments. The description of each node and the interface between nodes described above with reference to FIGS. 2 to 5 may be applied to the MN 910, the SN 920, and the UE 930.

Referring to FIG. 9, the wireless communication environment may include an MN 910, an SN 920, a UE 930, a UPF 940, and an AMF 950. The MN 910, which is an NG-RAN node, may provide an access network to the UE 930. The SN 920, which is an NG-RAN node, may provide an access network to the UE 930. An SN-terminated split bearer may be configured for the UE 930. The PDCP may be configured in the SN 920, and the MAC layer, the RLC layer and the physical layer may be configured in each of the MN 910 and the SN 920. A core network may include multiple entities. The UPF 940 of the core network is a network entity that serves as a gateway for transferring user data (e.g., packet data unit (PDU)) to a data network (DN). The AMF 950 of the core network is a network entity that manages mobility of a terminal (e.g., the UE 930).

In operation S901, the MN 910 may receive a measurement report or a medium access control (MAC) indication. The measurement report may include at least one of a measurement result for a serving cell of the MN or a measurement result for a neighboring cell. The measurement result may indicate the radio status of the uplink channel of the MN. The MAC indication may include a downlink data delivery status (DDDS). According to an embodiment, the MN 910 may determine whether the UL path using the MCG is available, based on at least one of the measurement report or the MAC indication.

In operation S903, the MN 910 may transmit a resource usage notification message to the SN 920 through the Xn interface. According to embodiments, the resource usage notification message may include indication information. The indication information may include information on usage of the UL path. The indication information may indicate whether the MCG resource or the SCG resource may be used for the UL path in the split bearer, that is, availability (or preference). The PDCP of the SN-terminated split bearer is positioned in the SN 920, and the RLC and the MAC of the SN-terminated split bearer are positioned in both the MN 910 and the SN 920. In order to determine an optimal UL primary path, the SN 920 requires information on an uplink radio channel in the MN 910 in addition to the SN 920. The MN 910 may determine whether the UL path using the MCG is available. As the determination of the MN 910 is provided to the SN 920, the SN 920 may identify the optimal UL primary path more accurately.

According to an embodiment, the resource usage notification message may include the following parameters as shown in the Table 9.

**[Table 9]**

| **IE/Group Name** | **Semantics description** |
|---|---|
| Message Type | |
| M-NG-RAN node UE XnAP ID | Allocated at the M-NG-RAN node |
| S-NG-RAN node UE XnAP ID | Allocated at the S-NG-RAN node |
| UE Context level UL Path Usage Indication | Indication of UL Path Usage for UE level |

| PDU Session Resource Usage List | |
|---|---|
| >PDU Session Resource Usage Item | If MN is sender, this is indication for SN-terminated DRB. |
| | If SN is sender, this is indication for MN-terminated DRB. |
| >>PDU Session ID | |
| >>PDU Session level UL Path Usage Indication | Indication of UL Path Usage for PDU Session Resource level |
| >>DRB List | |
| >>>DRB Item | |
| >>>>QoS Flow Identifier | |
| >>>>UL Path Usage Indication | Indication of UL Path usage preference by the sender node for the respective DRB |
| IE/Group Name | Semantics description |

Herein, the term 'Message Type' may indicate the type of a transmitted message (e.g., Initiating Message, Successful Outcome, Unsuccessful Outcome). The term 'M-NG-RAN node UE X1AP ID' refers to an ID for identifying a UE in an X1AP interface of an M-NG-RAN node. The term 'S-NG-RAN node X1AP ID' may indicate an ID for identifying a UE in an X1AP interface of an S-NG-RAN node. The term 'UE Context Level UL Path Usage Indication' may indicate a level of a resource unit at which the UL primary path is set. The term 'PDU Session Level UL Path Usage Indication' may indicate the usage of the UL path in unit of the PDU sessions. The term 'QoS Flow Identifier' may indicate an ID for identifying a QoS flow. The term 'UL Path Usage Indication' may indicate indication information. The term 'UL Path Usage Indication' may indicate a preference for UL usage related to the MCG resource of an MN 1010 in an SN-terminated split bearer. According to an embodiment, the indication information may simply indicate whether the UL usage related to the MCG resource is preferred. According to another embodiment, the indication information may indicate one of designated values. The designated values may indicate 'unpreferred', 'shared', and 'only'. The term 'unpreferred' may indicate that the usage of MCG resources is not preferred for UL data. The indication information may indicate 'shared'. The term 'shared' may indicate that the MCG and other MCG prefer to use the UL data together. The indication information may indicate 'only'. The term 'only' may indicate that the MCG is available for the UL data. According to another embodiment, the indication information may include both whether the UL usage related to the MCG resource is preferred and metrics (e.g., channel quality) related to the current uplink state, when the UL usage is available. Referring to the above embodiment, preference of using a UL path of the MCG resource or the SCG resource has been described as an example, but its availability may be used instead of such preference. According to an embodiment, the indication information may simply indicate whether the UL usage using the MCG resources is available. Further, at least some of the above-described parameters may be omitted for efficiency of its message format or the policy.

In operation S905, the SN 920 may trigger a UL path change. SN 920 may determine to change the UL path. To determine the path change, the SN 920 may identify the current UL primary path. The current UL primary path may refer to a UL primary path configured in the UE 930 for the SN-terminated split bearer. The SN 920 may identify an optimal UL primary path. When the current UL primary path is different from the optimal UL primary path, the SN 920 may determine to change the UL path. According to an embodiment, the SN 920 may identify the optimal UL primary path based on the indication information. The indication information may indicate availability or preference of the uplink radio network provided by the MN 910.

In operation S907, the SN 920 may transmit the SN modification required message to the MN 910. For example, the SN modification required message may be referred to as the SN modification message. According to an embodiment, the SN modification required message may include PDU session resource modification information. The PDU session resource information may be configured for an SN-terminated split bearer. For example, the PDU session resource modification information may be 'PDU Session Resource Modification Required Info - SN terminated' IE of 3GPP TS 38.423. The IE may include information related to the PDU session resource, for a request for modifying a DRB configured with an option corresponding to the SN-terminated bearer. The request may be initiated by an S-NG-RAN node. According to an embodiment, the PDU session resource information may include a DRB and indication information corresponding to the DRB. The indication information may indicate whether the MCG resource is available as the UL path in the DRB. For example, the PDU session resource information may include parameters as shown in Table 4.

In operation S909, the MN 910 may perform an SN modification procedure. The SN modification procedure may be selectively performed. The SN modification procedure of the MN 910 may include transmission of the SN modification request message using the X2 interface and reception of the SN modification request complete message using the X2 interface. The MN 910 may transmit the SN modification request message to the SN 920. The MN 910 may receive the SN modification request complete message from the SN 920.

In operation S911, the MN 910 may transmit an RRC reconfiguration message to the UE 930. The RRC reconfiguration message may be configured to carry the SN RRC reconfiguration. This is because the settings related to SN have been changed. The RRC reconfiguration message may include a PDCP configuration. The PDCP configuration may include information for indicating the UL primary path. For UL data transmission, the PDCP configuration may include information indicating that two or more RLC entities are associated with one PDCP entity (e.g., 'moreThanOneRLC' IE of 3GPP TS 38.331). According to an embodiment, the PDCP configuration may include information about a primary path (e.g., 'primarypath' IE of 3GPP TS 38.331).

In operation S913, the UE 930 may transmit an RRC reconfiguration complete message to the MN 910. The RRC reconfiguration complete message may be configured to carry the SN RRC reconfiguration complete message.

In operation S915, the MN 910 may transmit the SN modification confirm message to the SN 920 through the Xn interface. The SN modification confirm message may be configured to carry the SN RRC reconfiguration complete message.

Although FIG. 9 illustrates that the MN 910 performs an SN modification procedure, embodiments of the disclosure are not limited thereto. According to another embodiment, the SN modification procedure may be omitted.

FIG. 10 illustrates an example of a message for controlling a UL path of an MN-terminated split bearer according to embodiments. The description of each node and the interface between nodes described above with reference to FIGS. 2 to 5 may be also applied to the MN 1010, the SN 1020, and the UE 1030.

Referring to FIG. 10, the wireless communication environment may include an MN 1010, an SN 1020, a UE 1030, a UPF 1040, and an AMF 1050. The MN 1010, which is an NG-RAN node, may provide an access network to the UE 1030. The SN 1020, which is an NG-RAN node, may provide an access network to the UE 1030. For UE 1030, an MN-terminated split bearer may be configured. The PDCP may be configured in the SN 1020, and the MAC layer, the RLC layer and the physical layer may be configured in each of the MN 1010 and the SN 1020. A core network may include multiple entities. The UPF 1040 of the core network is a network entity that serves as a gateway for transferring user data (e.g., a packet data unit (PDU)) to a data network (DN). The AMF 1050 of the core network is a network entity that manages mobility of a terminal (e.g., the UE 1030).

In operation S1001, the SN 1020 may receive a measurement report or a medium access control (MAC) indication. The measurement report may include at least one of a measurement result for a serving cell of the MN or a measurement result for a neighboring cell. The measurement result may indicate the radio status of the uplink channel of the MN. The MAC indication may include a downlink data delivery status (DDDS). According to an embodiment, the MN 1010 may determine whether the UL path using the MCG is available, based on at least one of the measurement report or the MAC indication.

In operation S1003, the SN 1020 may transmit a resource usage notification message to the MN 1010 through the Xn interface. According to embodiments, the resource usage notification message may include indication information. The indication information may include information on usage of the UL path. The indication information may indicate whether the MCG resource or the SCG resource is available for the UL path in the split bearer, that is, the availability (or preference). The PDCP of the MN-terminated split bearer is positioned in the MN 1010, and the RLC and the MAC of the MN-terminated split bearer are positioned in both the MN 1010 and the SN 1020. In order to determine an optimal UL primary path, the SN 1020 requires information on the uplink radio channel in the MN 1010 in addition to the SN 1020. The SN 1020 may determine whether the UL path using the MCG is available. As the SN 1020 provides the result of the determination to the MN 1010, the MN 1010 may identify the optimal UL primary path more accurately.

According to an embodiment, the resource usage notification message may include parameters as shown in the Table 10 as follows.

**[Table 10]**

| **IE/Group Name** | **Semantics description** |
|---|---|
| Message Type | |
| M-NG-RAN node UE XnAP ID | Allocated at the M-NG-RAN node |
| S-NG-RAN node UE XnAP ID | Allocated at the S-NG-RAN node |
| UE Context level UL Path Usage Indication | Indication of UL Path Usage for UE level |

| PDU Session Resource Usage List | |
|---|---|
| >PDU Session Resource Usage Item | If MN is sender, this is indication for SN-terminated DRB. |
| | If SN is sender, this is indication for MN-terminated DRB. |
| >>PDU Session ID | |
| >>PDU Session level UL Path Usage Indication | Indication of UL Path Usage for PDU Session Resource level |
| >>DRB List | |
| >>>DRB Item | |
| >>>>QoS Flow Identifier | |
| >>>>UL Path Usage Indication | Indication of UL Path usage preference by the sender node for the respective DRB |
| IE/Group Name | Semantics description |

Herein, the term 'Message Type' may indicate the type of a transmitted message (e.g., Initiating Message, Successful Outcome, Unsuccessful Outcome). The term 'M-NG-RAN node UE X1AP ID' may refer to an ID for identifying a UE in an X1AP interface of an M-NG-RAN node. The term 'S-NG-RAN node X1AP ID' may indicate an ID for identifying a UE in an X1AP interface of an S-NG-RAN node. The term 'UE Context Level UL Path Usage Indication' may indicate a level of a resource unit in which the UL primary path is set. The term 'PDU Session Level UL Path Usage Indication' may indicate usage of the UL path in a unit of the PDU session. The term 'QoS Flow Identifier' may indicate an ID for identifying a QoS flow. The term 'UL Path Usage Indication' may indicate indication information. The term 'UL Path Usage Indication' may indicate preference of UL usage related to the MCG resource of the SN 1020 in the MN-terminated split bearer. According to an embodiment, the indication information may simply indicate whether the UL usage related to the MCG resource is preferred. According to another embodiment, the indication information may indicate one of designated values. The designated values may indicate 'unpreferred', 'shared', and 'only'. The term 'unpreferred' may indicate that the usage of MCG resources is not preferred for UL data. The indication information may indicate 'shared'. The term 'shared' may indicate that the MCG and other MCG prefer to use the UL data together. The indication information may indicate 'only'. The term 'only' may indicate that the MCG is available for the UL data. According to another embodiment, the indication information may include both whether the UL usage related to the MCG resource is preferred, and metrics (e.g., channel quality) related to the current uplink state when the UL usage is available. In the above embodiment, the preference of using the UL path of the MCG resource or the SCG resource has been described as an example, but its availability may be used in lieu of the preference (e.g., the indication information may indicate 'unavailable', 'shared', or 'only'). According to an embodiment, the indication information may simply indicate whether UL using MCG resources is available. Further, at least some of the above-described parameters may be omitted for efficiency of its message format or the policy.

In operation S1005, the MN 1010 may trigger a UL path change. The MN 1010 may determine to change the UL path. The MN 1010 may identify a current UL primary path. The current UL primary path may refer to a UL primary path configured in the UE 1030 for the MN-terminated split bearer. The MN 1010 may identify an optimal UL primary path. When the current UL primary path is different from the optimal UL primary path, the MN 1010 may determine to change the UL path. According to an embodiment, the MN 1010 may identify the optimal UL primary path based on the indication information. The indication information may indicate availability or preference of the uplink radio network provided by the SN 1020.

In operation S1007, the MN 1010 may transmit an SN Modification Request message to the SN 1020 through the Xn interface. According to an embodiment, the SN modification request message may include PDU session resource modification information. The PDU session resource information may be configured for an MN-terminated split bearer. For example, the PDU session resource modification information may be 'PDU Session Resource Modification Response Info - SN terminated' IE of 3GPP TS 38.423. The IE may include information related to a PDU session resource, for a request for modifying a DRB configured with an option corresponding to the MN-terminated bearer.

According to an embodiment, the SN modification request message may include a UL configuration. The PDU session resource information of the SN modification request message may include a DRB and the UL configuration corresponding to the DRB. This is because the UL primary path has been changed. The UL configuration may indicate whether the SCG is available for UL traffic. For example, the PDU session resource information may include parameters as shown in Table 5 described above.

In operation S1009, the SN 1020 may transmit an SN modification request confirm message to the MN 1010 through the Xn interface.

In operation S1011, the MN 1010 may transmit an RRC reconfiguration message to the UE 1030. The RRC reconfiguration message may be configured to carry the SN RRC reconfiguration. This is because the settings related to the SN have been changed. The RRC reconfiguration message may include a PDCP configuration. The PDCP configuration may include information for indicating the UL primary path. For UL data transmission, the PDCP configuration may include information indicating that two or more RLC entities are associated with one PDCP entity (e.g., 'moreThanOneRLC'IE of 3GPP TS 38.331). According to an embodiment, the PDCP configuration may include information on the primary path (e.g., 'primarypath' IE of 3GPP TS 38.331).

In operation S1013, the UE 1030 may transmit an RRC reconfiguration complete message to the MN 1010. The RRC reconfiguration complete message may be configured to carry the SN RRC reconfiguration complete message.

In operation S1015, the MN 1010 may transmit an SN reconfiguration complete message to the SN 1020 through the Xn interface. The SN reconfiguration complete message may be configured to carry the SN RRC reconfiguration complete message.

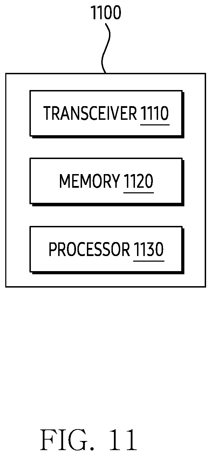

FIG. 11 illustrates a functional configuration of an apparatus acting as an MN or an SN according to embodiments. The apparatus 1100 acting as the MN or the SN may be a base station or a partial element of the base station. According to an embodiment, the apparatus may be a central unit (CU) of the MN or the SN. According to an embodiment, the apparatus may be a distributed unit (DU) of the MN or the SN. According to an embodiment, the apparatus may be a CU-CP (control plane) of the MN or the SN. According to an embodiment, the apparatus may be a CU-UP (user plane) of the MN or the SN.

Referring to FIG. 11, the apparatus 1100 may include at least one transceiver 1110, at least one memory 1120, and at least one processor 1130.

The transceiver 1110 may perform functions for transmitting and receiving signals through a radio channel. For example, the transceiver 1110 may perform a converting function between a baseband signal and a bit string according to a physical layer specification of the system. For example, upon data transmission, the transceiver 1110 generates complex symbols by encoding and modulating a transmit bit string. Further, upon data reception, the transceiver 1110 restores a receive bit string by demodulating and decoding the baseband signal. Further, the transceiver 1110 may up-convert the baseband signal into a radio frequency (RF) band signal to transmit the RF band signal through an antenna, and down-convert the RF band signal received through the antenna into the baseband signal.

To this end, the transceiver 1110 may include a transmission filter, a reception filter, an amplifier, a mixer, an oscillator, a digital to analog converter (DAC), an analog to digital converter (ADC), and the like. Further, the transceiver 1110 may include a plurality of transmission/reception paths. Moreover, the transceiver 1110 may include at least one antenna array having a plurality of antenna elements. In terms of hardware, the transceiver 1110 may include a digital unit and an analog unit, wherein the analog unit may include a plurality of sub-units according to operating power, operating frequency, and the like.

The transceiver 1110 transmits and receives signals as described above. Accordingly, the transceiver 1110 may be referred to as a 'transmitter unit', a 'receiver unit', or a 'transceiver unit'. Further, throughout the following description, transmission and reception performed via a radio channel, a backhaul network, an optical cable, Ethernet, and other wired paths are used to include the meaning that the above-described processing is performed by the transceiver 1110. According to an embodiment, the transceiver 1110 may provide an interface for communicating with other nodes in the network. In other words, the transceiver 1110 may convert a bit string transmitted from the apparatus 1100 to another node, such as e.g., another access node, another base station, an upper node, a core network, or the like, into a physical signal, and convert a physical signal received from another node into a bit string.

The memory 1120 may store data such as e.g., a basic program, an application program, and setting information for operating the apparatus 1100. The memory 1120 may store various data used by at least one component (e.g., the transceiver 1110 or the processor 1130). The data may include, for example, software and input data or output data for an instruction related thereto. The memory 1120 may include a volatile memory, a non-volatile memory, or a combination of the volatile memory and the non-volatile memory. Further, the memory 1120 may provide data stored therein according to a request of the processor 1130.

The processor 1130 may control the overall operations of the apparatus 1100. For example, the processor 1130 records or reads data in the memory 1120. For example, the processor 1130 transmits and receives a signal through the transceiver 1110. Although FIG. 11 illustrates one processor, embodiments of the disclosure are not limited thereto. The apparatus 1100 may include at least one processor to perform example embodiments. The processor 1130 may be referred to as a control unit or a control means, and may include processing circuitry. According to embodiments, the processor 1130 may control the apparatus 1100 to perform at least one of operations or methods according to example embodiments.

According to example embodiments, a method performed by a first node acting as a master node (MN) in dual connectivity may include receiving, from a second node acting as a secondary node (SN), an SN modification required message through an Xn interface. The SN modification required message may include indication information for an MN-terminated split bearer. The indication information may indicate availability of UL usage at the SN. The method may include identifying an uplink (UL) primary path of the MN-terminated split bearer, based on the indication information about the MN-terminated split bearer. The method may include transmitting information for indicating the UL primary path to a terminal. The UL primary path may be related to one of a master cell group (MCG) of the MN and a secondary cell group (SCG) of the SN.

According to an embodiment, the MN-terminated split bearer may be a data radio bearer (DRB) having both an MCG resource related to the MN and an SCG resource related to the SN, and the indication information may indicate whether the SCG resource is usable for UL transmission at the SN.

According to an embodiment, the method may further include, in case that a change of the UL primary path is detected, transmitting, to the second node operating as the SN, an SN modification request message through the Xn interface. The method may further include receiving, from the second node operating as the SN, an SN modification request acknowledge message through the Xn interface. The SN modification request message may include a UL configuration for the MN-terminated split bearer. The UL configuration may indicate a configuration method for how an UL PDCP (packet data convergence protocol) related to the MN-terminated split bearer is configured in the SN. The UL configuration may be determined based on the indication information.

According to an embodiment, the method may further include transmitting an SN modification confirm message to the base station acting as the SN through the Xn interface, in case that a change of the UL primary path is not detected.

According to an embodiment, the method may further include, in case that a change of the UL primary path is detected, transmitting a bearer context modification request message to a central unit-user plane (CU-UP) of the MN through an E1 interface. The method may further include receiving a bearer context modification response message from the CU-UP of the MN through the E1 interface. The bearer context modification request message may include a UL configuration for the MN-terminated split bearer. The UL configuration may indicate that the MCG is not used for uplink data, the MCG is used for the uplink data together with the SCG, or only the MCG is used for the uplink data.

According to example embodiments, a method performed by a second node operating as a secondary node (SN) in a dual connectivity may include obtaining uplink status information through a measurement report or a medium access control (MAC) indication from a user equipment (UE). The method may include generating indication information for an MN-terminated split bearer, based on the uplink status information. The indication information may indicate an availability of an uplink (UL) usage at the SN. The method may include transmitting, to a first node operating as a master node (MN) through an Xn interface, an SN modification required message. The indication information for the MN-terminated split bearer may be used for identifying an UL primary path of the MN-terminated split bearer. The UL primary path may be associated with one of a master cell group (MCG) of the MN and a secondary cell group (SCG) of the SN.

According to an embodiment, the MN-terminated split bearer may be a data radio bearer (DRB) having both an MCG resource related to the MN and an SCG resource related to the SN. The indication information may indicate whether the SCG resource is available for UL transmission in the SN.

According to an embodiment, the method may further include receiving, from a base station operating as the MN, an SN modification request message through the Xn interface. The method may further include transmitting, to the base station operating as the MN, an SN modification request acknowledge message through the Xn interface. The SN modification request message may include a UL configuration for the MN-terminated split bearer. The UL configuration may indicate a configuration method as to how an UL PDCP (packet data convergence protocol) related to the MN-terminated split bearer is configured in the SN. The UL configuration may be associated with the indication information. A reception of the SN modification request message may indicate a change of the UL primary path.

According to an embodiment, the method may further include receiving an SN modification confirm message from the base station acting as the MN through the Xn interface.

According to an embodiment, the method may further include transmitting a bearer context modification request message to a central unit (CU)-UP (user plane) of the SN through the E1 interface. The method may further include receiving a bearer context modification response message from the CU-UP of the SN through the E1 interface. The bearer context modification request message may include a UL configuration for the MN-terminated split bearer. The UL configuration may indicate that the MCG resource is not used for uplink data, indicate that the MCG resource is used for uplink data only, or indicate that both the MCG resource and the SCG resource are used for uplink data.

According to example embodiments, an apparatus of a first node operating as a master node (MN) in dual connectivity may include at least one transceiver, and at least one processor coupled, directly or indirectly, to the at least one transceiver. The at least one processor may be configured to receive, from a second node operating as a secondary node (SN) through an Xn interface, an SN modification message. The SN modification message may include indication information for an MN-terminated split bearer. The indication information may indicate availability of an uplink (UL) usage at the SN. The at least one processor may be configured to identify an UL primary path of the MN-terminated split bearer, based on the indication information for the MN-terminated split bearer. The at least one processor may be configured to transmit, to a user equipment (UE), information for indicating the UL primary path. The UL primary path may be associated with one of a master cell group (MCG) of the MN and a secondary cell group (SCG) of the SN.

According to an embodiment, the MN-terminated split bearer may be a data radio bearer (DRB) having both an MCG resource associated with the MN and an SCG resource associated with the SN. The indication information may indicate whether the SCG resource is available for UL transmission at the SN.

According to an embodiment, the at least one processor may be further configured to, in case that a change of the UL primary path is detected, transmit an SN modification request message to a base station acting as an SN through the Xn interface. The at least one processor may be further configured to receive an SN modification request acknowledge message from the base station acting as the SN through the Xn interface. The SN modification request message may include a UL configuration for the MN-terminated split bearer. The UL configuration may indicate a configuration device as to how a UL PDCP related to the MN-terminated split bearer is configured in the SN. The UL configuration may be determined based on the indication information.

According to an embodiment, the at least one processor may be further configured to, in case that a change of the UL primary path is not detected, transmit an SN modification confirm message to a base station acting as the SN through the Xn interface.

According to an embodiment, the at least one processor may be further configured to, in case that a change of the UL primary path is detected, transmit, to a central unit (CU)-user place (UP) of the MN, a bearer context modification request message through an E1 interface. The at least one processor may be further configured to receive, from the CU-UP of the MN, a bearer context modification response message through the E1 interface. The bearer context modification request message may include a UL configuration for the MN-terminated split bearer. The UL configuration may indicate that the MCG resource is not used for uplink data, only the MCG resource is used for the uplink data, or both the MCG resource and the SCG resource are used for the uplink data.

According to example embodiments, an apparatus of a second node operating as a secondary node (SN) in dual connectivity may include at least one transceiver, and at least one processor coupled, directly or indirectly, to the at least one transceiver. The at least one processor may be configured to obtain uplink status information through a measurement report or a medium access control (MAC) indication from a user equipment (UE). The at least one processor may be configured to generate indication information for an MN-terminated split bearer, based on the uplink status information. The indication information may indicate availability of UL usage at the SN. The at least one processor may be configured to transmit, to a first node operating as a master node (MN) through an Xn interface, an SN modification message. The indication information for the MN-terminated split bearer may be used for identifying an UL primary path of the MN-terminated split bearer. The UL primary path may be associated with one of a master cell group (MCG) of the MN and a secondary cell group (SCG) of the SN.

According to an embodiment, the MN-terminated split bearer may be a data radio bearer (DRB) having both an MCG resource related to the MN and an SCG resource related to the SN. The indication information may indicate whether the SCG resource is available for a UL transmission in the SN.

According to an embodiment, the at least one processor may be further configured to receive, from a base station operating as the MN, an SN modification request message through the Xn interface. The at least one processor may be further configured to transmit, to the base station operating as the MN, an SN modification request acknowledge message through the Xn interface. The SN modification request message may include a UL configuration for the MN-terminated split bearer. The UL configuration may indicate a configuration device for how an UL PDCP (packet data convergence protocol) related to the MN-terminated split bearer is configured in the SN. The UL configuration may be associated with the indication information. Reception of the SN modification request message may indicate a change of the UL primary path.

According to an embodiment, the at least one processor may be further configured to receive an SN modification confirm message from the base station acting as the MN through the Xn interface.

According to an embodiment, the at least one processor may be further configured to transmit, to a central unit (CU)-user plane (UP) of the SN, a bearer context modification request message, through an E1 interface. The at least one processor may be further configured to receive, from the CU-UP of the SN, a bearer context modification response message, through the E1 interface. The bearer context modification request message may include a UL configuration for the MN-terminated split bearer. The UL configuration may indicate that the MCG resource is not used for uplink data, only the MCG resource is used for the uplink data, or both the MCG resource and the SCG resource are used for uplink data. Each "processor" herein comprises processing circuitry.

According to example embodiments, a method performed by a first node operating as a master node (MN) in a dual connectivity, the method comprises receiving, from a second node operating as a secondary node (SN) through an Xn interface, an SN modification required message. The SN modification required message includes indication information for an MN-terminated split bearer associated with one packet data convergence protocol (PDCP) entity in the MN and two radio link control (RLC) entities including a first RLC entity in the MN and a second RLC entity in the SN. The method comprises identifying a UL primary path of the MN-terminated split bearer, based on the indication information for the MN-terminated split bearer. The method comprises transmitting, to a user equipment (UE), a radio resource control (RRC) reconfiguration message including PDCP information for indicating the UL primary path. The UL primary path is associated with one of the first RLC entity of the MN and the second RLC entity of the SN. The indication information indicates whether secondary cell group (SCG) resources of the SN are enabled or disabled for the UL primary path of the MN-terminated split bearer.

According to an embodiment, the method further comprises, based on a change of the UL primary path being identified, transmitting, to the second node operating as the SN, an SN modification request message through the Xn interface. The method further comprises receiving, from the second node operating as the SN, an SN modification request acknowledge message through the Xn interface. The SN modification request message includes a UL configuration for the MN-terminated split bearer. The UL configuration indicates a configuration method for an UL PDCP related to the MN-terminated split bearer in the SN. the configuration method comprises a method that master cell group (MCG) resources of the MN are not used for the UL PDCP. The UL configuration is based on the change of the UL primary path.

According to example embodiments, a method performed by a second node operating as a secondary node (SN) in a dual connectivity, comprises obtaining uplink status information through at least one of a measurement report or a medium access control (MAC) indication from a user equipment (UE). The method comprises generating indication information for an MN-terminated split bearer associated with one packet data convergence protocol (PDCP) entity in the MN and two radio link control (RLC) entities including a first RLC entity in the MN and a second RLC entity in the SN. The method comprises transmitting, to a first node operating as a master node (MN) through an Xn interface, an SN modification required message including the indication information for the MN-terminated split-bearer. The indication information for the MN-terminated split bearer is used for identifying a UL primary path of the MN-terminated split bearer. The UL primary path is associated with one of the first RLC entity of the MN and the second RLC entity of the SN. The indication information indicates whether secondary cell group (SCG) resources of the SN are enabled or disabled for the UL primary path of the MN-terminated split bearer.

According to an embodiment. The method further comprises receiving, from the first node operating as the MN, an SN modification request message through an Xn interface. The method further comprises transmitting, to the second node operating as the MN, an SN modification request acknowledge message through the Xn interface. The SN modification request message includes a UL configuration for the MN-terminated split bearer. The UL configuration indicates a configuration method for a UL PDCP related to the MN-terminated split bearer in the SN. the configuration method comprises a method that master cell group (MCG) resources of the MN are not used for the UL PDCP. The UL configuration is based on a change of the UL primary path.

According to example embodiments, an apparatus of a first node operating as a master node (MN) in a dual connectivity, the apparatus comprises at least one transceiver and at least one processor coupled to the at least one transceiver. The at least one processor is configured to control the at least one transceiver to receive, from a second node operating as a secondary node (SN) through an Xn interface, an SN modification message. The SN modification message includes indication information for an MN-terminated split bearer associated with one packet data convergence protocol (PDCP) entity in the MN and two radio link control (RLC) entities including a first RLC entity in the MN and a second RLC entity in the SN. The at least one processor is configured to identify a UL primary path of the MN-terminated split bearer, based on the indication information for the MN-terminated split bearer. The at least one processor is configured to control the at least one transceiver to transmit, to a user equipment (UE), a radio resource control (RRC) reconfiguration message including PDCP information for indicating the UL primary path. The UL primary path is associated with one of the first RLC entity of the MN and the second RLC entity of the SN. The indication information indicates whether secondary cell group (SCG) resources of the SN are enabled or disabled for the UL primary path of the MN-terminated split bearer.

According to an embodiment, the at least one processor is further configured to, based on a change of the UL primary path being identified, control the at least one transceiver to transmit, to the second node operating as the SN, an SN modification request message through the Xn interface. The at least one processor is further configured to control the at least one transceiver to receive, from the second node operating as the SN, an SN modification request acknowledge message through the Xn interface. The SN modification request message includes a UL configuration for the MN-terminated split bearer. The UL configuration indicates a configuration method for a UL PDCP related to the MN-terminated split bearer in the SN. the configuration method comprises a method that master cell group (MCG) resources of the MN are not used for the UL PDCP. The UL configuration is based on the change of the UL primary path.

According to example embodiments, an apparatus of a second node operating as a secondary node (SN) in a dual connectivity, comprises at least one transceiver and at least one processor coupled to the at least one transceiver. The at least one processor is configured to obtain uplink status information through at least one of a measurement report or a medium access control (MAC) indication from a user equipment (UE). The at least one processor is configured to generate indication information for an MN-terminated split bearer associated with one packet data convergence protocol (PDCP) entity in the MN and two radio link control (RLC) entities including a first RLC entity in the MN and a second RLC entity in the SN. The at least one processor is configured to control the at least one transceiver to transmit, to a first node operating as a master node (MN) through an Xn interface, an SN modification required message including the indication information for the MN-terminated split-bearer. The indication information for the MN-terminated split bearer is configured to be used for identifying a UL primary path of the MN-terminated split bearer. The UL primary path is associated with one of the first RLC entity of the MN and the second RLC entity of the SN. The indication information indicates whether secondary cell group (SCG) resources of the SN are enabled or disabled for the UL primary path of the MN-terminated split bearer.

According to an embodiment, the at least one processor is further configured to control the at least one transceiver to receive, from the first node operating as the MN, an SN modification request message through the Xn interface. The at least one processor is further configured to control the at least one transceiver to transmit, to the second node operating as the MN, an SN modification request acknowledge message through the Xn interface. The SN modification request message includes a UL configuration for the MN-terminated split bearer. The UL configuration indicates a configuration method for a UL PDCP related to the MN-terminated split bearer in the SN. the configuration method comprises a method that master cell group (MCG) resources of the MN are not used for the UL PDCP. The UL configuration is based on a change of the UL primary path.

According to example embodiments, a method performed by a first node operating as a master node (MN), the method comprises receiving, from a second node operating as a secondary node (SN) through an Xn interface, an SN modification required message. The SN modification required message includes indication information for indicating whether secondary cell group (SCG) resources of the SN are enabled or disabled for uplink transmission. The method comprises transmitting, to the second node through the Xn interface, an SN modification confirm message in response to the SN modification required message. The method comprises identifying a UL primary path which is associated with one of a first radio link control (RLC) entity in the MN and a second RLC entity of the SN, based on the indication information. The method comprises transmitting, to a user equipment (UE), a radio resource control (RRC) reconfiguration message including packet data convergence protocol (PDCP) information for indicating the UL primary path. In case that the SCG resources of the SN are disabled, the indicated UL primary path is associated with the first RLC entity in the MN.

According to an embodiment. The indication information is associated with a MN-terminated split bearer associated with one packet data convergence protocol (PDCP) entity in the MN. The first node and the second node are configured in a dual connectivity for the UE.

According to an embodiment, the method further comprises, based on a change of the UL primary path being identified, transmitting, to the second node, an SN modification request message through the Xn interface. The method comprises receiving, from the second node, an SN modification request acknowledge message through the Xn interface. The SN modification request message includes a UL configuration for the MN-terminated split bearer. The UL configuration indicates a configuration method for how an UL packet data convergence protocol (PDCP) related to the MN-terminated split bearer is configured in the SN. The UL configuration is based on the indication information.

According to an embodiment. The indication information indicates whether the second RLC entity in the SN is used for the UL transmission or not based on at least one measurement report in the SN.

According to example embodiments, a method performed by a secondary node (SN), comprises generating indication information for indicating whether secondary cell group (SCG) resources of the SN are enabled or disabled for uplink transmission. The method comprises transmitting, to a first node operating as a master node (MN) through an Xn interface, an SN modification required message. The SN modification required message includes the indication information. The method comprises receiving, from the first node through the Xn interface, an SN modification confirm message in response to the SN modification required message. The indication information is used for identifying a UL primary path which is associated with one of a first radio link control (RLC) entity in the MN and a second RLC entity of the SN. In case that the SCG resources of the SN are disabled, the identified UL primary path is associated with the first RLC entity in the MN.

According to an embodiment. The indication information is associated with a MN-terminated split bearer associated with one packet data convergence protocol (PDCP) entity in the MN. The first node and the second node are configured in a dual connectivity for the UE.

According to an embodiment, the method further comprises receiving, from the first node, an SN modification request message through the Xn interface. The method further comprises transmitting, to the first node, an SN modification request acknowledge message through the Xn interface. The SN modification request message includes a UL configuration for the MN-terminated split bearer. The UL configuration indicates a configuration method for how an UL packet data convergence protocol (PDCP) related to the MN-terminated split bearer is configured in the SN. The UL configuration is based on a change of the UL primary path.

According to an embodiment. The indication information indicates whether the second RLC entity in the SN is used for the UL transmission or not based on at least one measurement report received from the SN.

According to example embodiments, an apparatus of a first node operating as a master node (MN). The apparatus comprises at least one transceiver and at least one processor coupled to the at least one transceiver. The at least one processor is configured to control the at least one transceiver to receive, from a second node operating as a secondary node (SN) through an Xn interface, an SN modification required message. The SN modification required message includes indication information for indicating whether secondary cell group (SCG) resources of the SN are enabled or disabled for uplink transmission. The at least one processor is configured to control the at least one transceiver to transmit, to the second node through the Xn interface, an SN modification confirm message in response to the SN modification required message. The at least one processor is configured to identify a UL primary path which is associated with one of a first radio link control (RLC) entity in the MN and a second RLC entity of the SN, based on the indication information. The at least one processor is configured to control the at least one transceiver to transmit, to a user equipment (UE), a radio resource control (RRC) reconfiguration message including packet data convergence protocol (PDCP) information for indicating the UL primary path. In case that the SCG resources of the SN are disabled, the indicated UL primary path is associated with the first RLC entity in the MN.

According to an embodiment. The indication information is associated with a MN-terminated split bearer associated with one packet data convergence protocol (PDCP) entity in the MN. The first node and the second node are configured in a dual connectivity for the UE.

According to an embodiment, the at least one processor is further configured to, based on a change of the UL primary path being identified, control the at least one transceiver to transmit, to the second node, an SN modification request message through the Xn interface. The at least one processor is further configured to control the at least one transceiver to receive from the second node, an SN modification request acknowledge message through the Xn interface. The SN modification request message includes a UL configuration for the MN-terminated split bearer. The UL configuration indicates a configuration method for how an UL packet data convergence protocol (PDCP) related to the MN-terminated split bearer is configured in the SN. The UL configuration is based on the indication information.

According to an embodiment, the indication information indicates whether the second RLC entity in the SN is used for the UL transmission or not based on at least one measurement report in the SN.

According to example embodiments, an apparatus of a second node operating as a secondary node (SN) comprises at least one transceiver and at least one processor coupled to the at least one transceiver. The at least one processor is configured to generate indication information for indicating whether secondary cell group (SCG) resources of the SN are enabled or disabled for uplink transmission. The at least one processor is configured to control the at least one transceiver to transmit, to a first node operating as a master node (MN) through an Xn interface, an SN modification required message. The SN modification required message includes the indication information. The at least one processor is configured to control the at least one transceiver to receive, from the first node through the Xn interface, an SN modification confirm message in response to the SN modification required message. The indication information is used for identifying a UL primary path which is associated with one of a first radio link control (RLC) entity in the MN and a second RLC entity of the SN. In case that the SCG resources of the SN are disabled, the identified UL primary path is associated with the first RLC entity in the MN.

According to an embodiment. The indication information is associated with a MN-terminated split bearer associated with one packet data convergence protocol (PDCP) entity in the MN. The first node and the second node are configured in a dual connectivity for the UE.

According to an embodiment, the at least one processor is further configured to control the at least one transceiver to receive, from the first node, an SN modification request message through the Xn interface. The at least one processor is further configured to control the at least one transceiver to transmit to the first node, an SN modification request acknowledge message through the Xn interface. The SN modification request message includes a UL configuration for the MN-terminated split bearer. The UL configuration indicates a configuration method for how an UL packet data convergence protocol (PDCP) related to the MN-terminated split bearer is configured in the SN. The UL configuration is based on a change of the UL primary path.

According to an embodiment, the indication information indicates whether the second RLC entity in the SN is used for the UL transmission or not based on at least one measurement report received from the SN.

In the above-described embodiments, the split bearer of the DRB has been described as an example. However, the technical principles of the example embodiments may be also applied to a split bearer of an SRB, that is, a split-SRB bearer in the same manner.

In the above-described embodiments, NR-NR DC has been described as an example. However, the technical principles of the example embodiments may be also applied to other types of DCs (e.g., EN-DC, NGEN-DC, and NE-DC) in the same manner.

The MN and the SN can exchange information on the PCell and the PSCell to configure the UL basic path and the UL split threshold of the MN-terminated split bearer or the SN-terminated split bearer. With this mechanism, the MN may control the UL path configuration for the MN-terminated split bearer based on cell group information hosted by other nodes. The SN can control the UL path configuration for the SN-terminated split bearer based on the cell group information hosted by the other nodes. "Based on" as used herein covers based at least on.

Each embodiment herein may be used in combination with any other embodiment(s) described herein.

Example embodiments can identify an efficient and optimal UL path configuration. According to embodiments, any network entity constituting a base station may be configured to trigger an operation for changing the UL path of the split bearer. That is, in order to configure the UL basic path and the UL split threshold of the split bearer, example embodiments can provide a large degree of freedom. Furthermore, the example embodiments can be performed before transmission of an UL path configuration (e.g., a 'primary path' IE of 3GPP TS 38.331) to a UE, thereby providing enhanced compatibility of implementation in an existing procedure.

The methods according to various embodiments described in the claims and/or the specification of the disclosure may be implemented in hardware, software, or a combination of hardware and software.

When implemented by software, a computer-readable storage medium storing one or more programs (software modules) may be provided. One or more programs stored in such a computer-readable storage medium are configured for execution by one or more processors in an electronic device. The one or more programs include instructions that cause the electronic device to execute the methods according to embodiments described in the claims or specification of the disclosure.

Such a program (e.g., software module, software) may be stored in a random-access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), other types of optical storage devices, or magnetic cassettes. Alternatively, it may be stored in a memory configured with a combination of some or all of the above. In addition, respective constituent memories may be provided in a multiple number. Each "module" herein may comprise circuitry.

Further, the program may be stored in an attachable storage device that can be accessed via a communication network such as e.g., Internet, Intranet, local area network (LAN), wide area network (WAN), or storage area network (SAN), or a communication network configured with a combination thereof. Such a storage device may access an apparatus performing an embodiment of the disclosure through an external port. Further, a separate storage device on the communication network may be accessed to an apparatus performing an embodiment of the disclosure.

In the above-described specific example embodiments, a component included therein may be expressed in a singular or plural form according to a proposed specific embodiment. However, such a singular or plural expression may be selected appropriately for the presented context for the convenience of description, and the disclosure is not limited to the singular form or the plural elements. Therefore, either an element expressed in the plural form may be formed of a singular element, or an element expressed in the singular form may be formed of plural elements.

Meanwhile, specific embodiments have been described in the detailed description of the disclosure, but it goes without saying that various modifications are possible without departing from the scope of the disclosure.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A method performed by a first node operating as a master node (MN) in a dual connectivity, the method comprising:
receiving, from a second node operating as a secondary node (SN) through an Xn interface, an SN modification required message, wherein the SN modification required message includes indication information for an MN-terminated split bearer associated with one packet data convergence protocol (PDCP) entity in the MN and two radio link control (RLC) entities including a first RLC entity in the MN and a second RLC entity in the SN;
identifying a UL primary path of the MN-terminated split bearer, based on the indication information for the MN-terminated split bearer; and
transmitting, to a user equipment (UE), a radio resource control (RRC) reconfiguration message including PDCP information for indicating the UL primary path; and
wherein the indication information indicates whether secondary cell group (SCG) resources of the SN are enabled or disabled for the UL primary path of the MN-terminated split bearer.

2. The method of claim 1,
wherein the MN-terminated split bearer is a data radio bearer (DRB) comprising an MCG resource associated with the MN and a SCG resource associated with the SN, and
wherein the indication information indicates whether the SCG resource is available for an uplink transmission in the SN or not.

3. The method of claim 1, further comprising:
based on a change of the UL primary path being identified, transmitting, to the second node operating as the SN, an SN modification request message through the Xn interface; and
receiving, from the second node operating as the SN, an SN modification request acknowledge message through the Xn interface,
wherein the SN modification request message includes a UL configuration for the MN-terminated split bearer,
wherein the UL configuration indicates a configuration method for an UL PDCP related to the MN-terminated split bearer in the SN,
wherein the configuration method comprises a method that master cell group (MCG) resources of the MN are not used for the UL PDCP, and
wherein the UL configuration is based on the change of the UL primary path.

4. The method of claim 1, further comprising:
based on a change of the UL primary path not being identified, transmitting, to the second node operating as the SN, an SN modification confirm message through the Xn interface.

5. The method of claim 1, further comprising:
based on a change of the UL primary path being identified, transmitting, to a central unit (CU) - user plane (UP) of the MN, a bearer context modification request message, through an E1 interface; and
receiving, from the CU-UP of the MN, a bearer context modification response message, through the E1 interface,
wherein the bearer context modification request message includes a UL configuration for the MN-terminated split bearer, and
wherein the UL configuration:
indicates that the MCG resource is not used for uplink data,
indicates that only the MCG resource is used for uplink data, or
indicates that both the MCG resource and the SCG resource are used for uplink data.

6. A method performed by a second node operating as a secondary node (SN) in a dual connectivity, the method comprising:
obtaining uplink status information through at least one of a measurement report or a medium access control (MAC) indication from a user equipment (UE);
generating indication information for an MN-terminated split bearer associated with one packet data convergence protocol (PDCP) entity in the MN and two radio link control (RLC) entities including a first RLC entity in the MN and a second RLC entity in the SN;
transmitting, to a first node operating as a master node (MN) through an Xn interface, an SN modification required message including the indication information for the MN-terminated split-bearer,
wherein the indication information for the MN-terminated split bearer is used for identifying a UL primary path of the MN-terminated split bearer, and
wherein the UL primary path is associated with one of the first RLC entity of the MN and the second RLC entity of the SN, and
wherein the indication information indicates whether secondary cell group (SCG) resources of the SN are enabled or disabled for the UL primary path of the MN-terminated split bearer.

7. The method of claim 6,
wherein the MN-terminated split bearer is a data radio bearer (DRB) comprising an MCG resource associated with the MN and a SCG resource associated with the SN, and
wherein the indication information indicates whether the SCG resource is available for an uplink transmission in the SN or not.

8. The method of claim 6, further comprising:
receiving, from the first node operating as the MN, an SN modification request message through an Xn interface; and
transmitting, to the second node operating as the MN, an SN modification request acknowledge message through the Xn interface,
wherein the SN modification request message includes a UL configuration for the MN-terminated split bearer,
wherein the UL configuration indicates a configuration method for a UL PDCP related to the MN-terminated split bearer in the SN,
wherein the configuration method comprises a method that master cell group (MCG) resources of the MN are not used for the UL PDCP, and
wherein the UL configuration is based on a change of the UL primary path.

9. The method of claim 6, further comprising:
receiving, from the first node operating as the MN, a SN modification confirm message through the Xn interface.

10. The method of claim 6, further comprising:
transmitting, to a central unit (CU) - user plane (UP) of the SN, a bearer context modification request message, through an E1 interface; and
receiving, from the CU-UP of the SN, a bearer context modification response message, through the E1 interface,
wherein the bearer context modification request message includes a UL configuration for the MN-terminated split bearer, and
wherein the UL configuration:
indicates that the MCG resource is not used for uplink data,
indicates that only the MCG resource is used for uplink data, or
indicates that both the MCG resource and the SCG resource are used for uplink data.

11. An apparatus of a first node operating as a master node (MN) in a dual connectivity, the apparatus comprising:
at least one transceiver; and
at least one processor coupled to the at least one transceiver,
wherein the at least one processor is configured to:
control the at least one transceiver to receive, from a second node operating as a secondary node (SN) through an Xn interface, an SN modification message, wherein the SN modification message includes indication information for an MN-terminated split bearer associated with one packet data convergence protocol (PDCP) entity in the MN and two radio link control (RLC) entities including a first RLC entity in the MN and a second RLC entity in the SN;
identify a UL primary path of the MN-terminated split bearer, based on the indication information for the MN-terminated split bearer; and
control the at least one transceiver to transmit, to a user equipment (UE), a radio resource control (RRC) reconfiguration message including PDCP information for indicating the UL primary path; and
wherein the indication information indicates whether secondary cell group (SCG) resources of the SN are enabled or disabled for the UL primary path of the MN-terminated split bearer.

12. The apparatus of claim 11,
wherein the MN-terminated split bearer is a data radio bearer (DRB) comprising an MCG resource associated with the MN and a SCG resource associated with the SN, and
wherein the indication information indicates whether the SCG resource is available for an uplink transmission in the SN or not.

13. The apparatus of claim 11, wherein the at least one processor is further configured to:
based on a change of the UL primary path being identified, control the at least one transceiver to transmit, to the second node operating as the SN, an SN modification request message through the Xn interface; and
control the at least one transceiver to receive, from the second node operating as the SN, an SN modification request acknowledge message through the Xn interface,
wherein the SN modification request message includes a UL configuration for the MN-terminated split bearer,
wherein the UL configuration indicates a configuration method for a UL PDCP related to the MN-terminated split bearer in the SN,
wherein the configuration method comprises a method that master cell group (MCG) resources of the MN are not used for the UL PDCP, and
wherein the UL configuration is based on the change of the UL primary path.

14. The apparatus of claim 11, wherein the at least one processor is further configured to, based on a change of the UL primary path not being identified, control the at least one transceiver to transmit, to the second node operating as the SN, an SN modification confirm message through the Xn interface.

15. The apparatus of claim 11, wherein the at least one processor is further configured to:
based on a change of the UL primary path being identified, control the at least one transceiver to transmit, to a central unit (CU) - user plane (UP) of the MN, a bearer context modification request message, through an E1 interface; and
control the at least one transceiver to receive, from the CU-UP of the MN, a bearer context modification response message, through the E1 interface,
wherein the bearer context modification request message includes a UL configuration for the MN-terminated split bearer, and
wherein the UL configuration:
indicates that the MCG resource is not used for uplink data,
indicates that only the MCG resource is used for uplink data, or
indicates that both the MCG resource and the SCG resource are used for uplink data.

16. A method performed by a first node operating as a master node (MN), the method comprising:
receiving, from a second node operating as a secondary node (SN) through an Xn interface, an SN modification required message, wherein the SN modification required message includes indication information for indicating whether secondary cell group (SCG) resources of the SN are enabled or disabled for uplink transmission;
transmitting, to the second node through the Xn interface, an SN modification confirm message in response to the SN modification required message,
identifying a UL primary path which is associated with one of a first radio link control (RLC) entity in the MN and a second RLC entity of the SN, based on the indication information; and
transmitting, to a user equipment (UE), a radio resource control (RRC) reconfiguration message including packet data convergence protocol (PDCP) information for indicating the UL primary path,
wherein, in case that the SCG resources of the SN are disabled, the indicated UL primary path is associated with the first RLC entity in the MN.

17. The method of claim 16,
wherein the indication information is associated with a MN-terminated split bearer associated with one packet data convergence protocol (PDCP) entity in the MN, and
wherein the first node and the second node are configured in a dual connectivity for the UE.

18. The method of claim 17, further comprising:
based on a change of the UL primary path being identified, transmitting, to the second node, an SN modification request message through the Xn interface; and
receiving, from the second node, an SN modification request acknowledge message through the Xn interface,
wherein the SN modification request message includes a UL configuration for the MN-terminated split bearer,
wherein the UL configuration indicates a configuration method for how an UL packet data convergence protocol (PDCP) related to the MN-terminated split bearer is configured in the SN, and
wherein the UL configuration is based on the indication information.

19. The method of claim 16,
wherein the indication information indicates whether the second RLC entity in the SN is used for the UL transmission or not based on at least one measurement report in the SN.

20. A method performed by a secondary node (SN), the method comprising:
generating indication information for indicating whether secondary cell group (SCG) resources of the SN are enabled or disabled for uplink transmission;
transmitting, to a first node operating as a master node (MN) through an Xn interface, an SN modification required message, wherein the SN modification required message includes the indication information; and
receiving, from the first node through the Xn interface, an SN modification confirm message in response to the SN modification required message,
wherein the indication information is used for identifying a UL primary path which is associated with one of a first radio link control (RLC) entity in the MN and a second RLC entity of the SN, and
wherein, in case that the SCG resources of the SN are disabled, the identified UL primary path is associated with the first RLC entity in the MN.

21. The method of claim 20,
wherein the indication information is associated with a MN-terminated split bearer associated with one packet data convergence protocol (PDCP) entity in the MN, and
wherein the first node and the second node are configured in a dual connectivity for the UE.

22. The method of claim 21, further comprising:
receiving, from the first node, an SN modification request message through the Xn interface; and
transmitting, to the first node, an SN modification request acknowledge message through the Xn interface,
wherein the SN modification request message includes a UL configuration for the MN-terminated split bearer,
wherein the UL configuration indicates a configuration method for how an UL packet data convergence protocol (PDCP) related to the MN-terminated split bearer is configured in the SN, and
wherein the UL configuration is based on a change of the UL primary path.

23. The method of claim 20,
wherein the indication information indicates whether the second RLC entity in the SN is used for the UL transmission or not based on at least one measurement report received from the SN.

24. An apparatus of a first node operating as a master node (MN), the apparatus comprising:
at least one transceiver; and
at least one processor coupled to the at least one transceiver,
wherein the at least one processor is configured to:
control the at least one transceiver to receive, from a second node operating as a secondary node (SN) through an Xn interface, an SN modification required message, wherein the SN modification required message includes indication information for indicating whether secondary cell group (SCG) resources of the SN are enabled or disabled for uplink transmission;
control the at least one transceiver to transmit, to the second node through the Xn interface, an SN modification confirm message in response to the SN modification required message,
identify a UL primary path which is associated with one of a first radio link control (RLC) entity in the MN and a second RLC entity of the SN, based on the indication information; and
control the at least one transceiver to transmit, to a user equipment (UE), a radio resource control (RRC) reconfiguration message including packet data convergence protocol (PDCP) information for indicating the UL primary path,
wherein, in case that the SCG resources of the SN are disabled, the indicated UL primary path is associated with the first RLC entity in the MN.

25. The apparatus of claim 24,
wherein the indication information is associated with a MN-terminated split bearer associated with one packet data convergence protocol (PDCP) entity in the MN, and
wherein the first node and the second node are configured in a dual connectivity for the UE.

26. The apparatus of claim 25, wherein the at least one processor is further configured to:
based on a change of the UL primary path being identified, control the at least one transceiver to transmit, to the second node, an SN modification request message through the Xn interface; and
control the at least one transceiver to receive from the second node, an SN modification request acknowledge message through the Xn interface,
wherein the SN modification request message includes a UL configuration for the MN-terminated split bearer,
wherein the UL configuration indicates a configuration method for how an UL packet data convergence protocol (PDCP) related to the MN-terminated split bearer is configured in the SN, and
wherein the UL configuration is based on the indication information.

27. The apparatus of claim 24,
wherein the indication information indicates whether the second RLC entity in the SN is used for the UL transmission or not based on at least one measurement report in the SN.

28. An apparatus of a second node operating as a secondary node (SN), the apparatus comprising:
at least one transceiver; and
at least one processor coupled to the at least one transceiver,
wherein the at least one processor is configured to:
generate indication information for indicating whether secondary cell group (SCG) resources of the SN are enabled or disabled for uplink transmission;
control the at least one transceiver to transmit, to a first node operating as a master node (MN) through an Xn interface, an SN modification required message, wherein the SN modification required message includes the indication information; and
control the at least one transceiver to receive, from the first node through the Xn interface, an SN modification confirm message in response to the SN modification required message,
wherein the indication information is used for identifying a UL primary path which is associated with one of a first radio link control (RLC) entity in the MN and a second RLC entity of the SN, and
wherein, in case that the SCG resources of the SN are disabled, the identified UL primary path is associated with the first RLC entity in the MN.

29. The apparatus of claim 28,
wherein the indication information is associated with a MN-terminated split bearer associated with one packet data convergence protocol (PDCP) entity in the MN, and
wherein the first node and the second node are configured in a dual connectivity for the UE.

30. The apparatus of claim 29, wherein the at least one processor is further configured to:
control the at least one transceiver to receive, from the first node, an SN modification request message through the Xn interface; and
control the at least one transceiver to transmit, to the first node, an SN modification request acknowledge message through the Xn interface,
wherein the SN modification request message includes a UL configuration for the MN-terminated split bearer,
wherein the UL configuration indicates a configuration method for how an UL packet data convergence protocol (PDCP) related to the MN-terminated split bearer is configured in the SN, and
wherein the UL configuration is based on a change of the UL primary path.

31. The apparatus of claim 28,
wherein the indication information indicates whether the second RLC entity in the SN is used for the UL transmission or not based on at least one measurement report received from the SN.
